# EUROPÄISCHE PATENTSCHRIFT

(11) **EP 4 038 031 B1**
(45) Veröffentlichungstag und Bekanntmachung des Hinweises auf die Patenterteilung: **19.02.2025**
(21) Anmeldenummer: 20780632.4
(22) Anmeldetag: 23.09.2020
(51) Int. Cl.: C03B 33/10, C03B 33/027, C03B 33/03, C03B 33/037, C03B 33/07, B24B 49/00, B28D 1/00, B28D 1/22, B28D 7/00

(54) **SCHNEIDVERFAHREN UND SCHNEIDEINRICHTUNG ZUM RITZEN VON BAUTEILEN AUS GLAS ODER KERAMIK SOWIE VERFAHREN ZUM AUFTEILEN VON BAUTEILEN AUS GLAS ODER KERAMIK**
CUTTING METHOD AND CUTTING DEVICE FOR SCORING COMPONENTS MADE OF GLASS OR CERAMIC, AND METHOD FOR SPLITTING COMPONENTS MADE OF GLASS OR CERAMIC
PROCÉDÉ DE COUPE ET DISPOSITIF DE COUPE POUR LE RAINURAGE D'ÉLÉMENTS EN VERRE OU EN CÉRAMIQUE, ET PROCÉDÉ DE SÉPARATION D'ÉLÉMENTS EN VERRE OU EN CÉRAMIQUE

(30) Priorität: 30.09.2019 DE 102019215077
(43) Veröffentlichungstag der Anmeldung: 10.08.2022
(73) Patentinhaber: HEGLA GmbH & Co. KG, 37688 Beverungen (DE)
(72) Erfinder: OSTENDARP, Heinrich, 42781 Haan (DE)
(74) Vertreter: Dr. Solf & Zapf Patent- und Rechtsanwalts PartG mbB
(86) Internationale Anmeldenummer: PCT/EP2020/076576
(87) Internationale Veröffentlichungsnummer: WO 2021/063769

(56) Entgegenhaltungen:
- JP-A- H07 257 935
- US-A- 3 880 028

## Beschreibung

Die vorliegende Erfindung betrifft ein Schneidverfahren und eine Schneideinrichtung zum oberflächlichen Ritzen von, bevorzugt plattenförmigen, Bauteilen aus Glas oder Keramik, vorzugsweise von Glasscheiben, sowie ein Verfahren zum Aufteilen von, bevorzugt plattenförmigen, Bauteilen aus Glas oder Keramik, vorzugsweise von Glasscheiben, z.B. von Floatglasscheiben oder Verbundglasscheiben, insbesondere Verbundsicherheitsglasscheiben, in einzelne Bauteilzuschnitte, vorzugsweise Glasscheibenzuschnitte.

Als Flachglas wird jedes Glas in Form von Glasscheiben bezeichnet, unabhängig vom angewandten Herstellungsverfahren.

Bei Verbundglasscheiben handelt es sich um ein Laminat aus mindestens zwei einzelnen Glasplatten, die jeweils mittels einer klebfähigen Zwischenschicht aus Kunststoff miteinander verbunden sind. Bei Verbundsicherheitsglas besteht die Zwischenschicht zur Verbindung der einzelnen Glasplatten in der Regel aus einer elastischen, reißfesten Hochpolymerfolie, so dass beim Bruch der Scheiben die Bruchstücke an der Folie haften bleiben. Dies mindert das Risiko von Schnitt- oder Stichverletzungen. Auch weist die Verbundsicherheitsglasscheibe nach dem Bruch eine Resttragfähigkeit auf.

Flachglasscheiben können aus einer einzigen Glasplatte (Einzelglasscheiben) bestehen oder aus mehreren miteinander verklebten Glasplatten (Verbundglasscheiben).

Das Aufteilen von Einzelglasscheiben erfolgt in der Regel dadurch, dass die aufzuteilende Glasscheibe oberflächlich bzw. an einer ihrer beiden Glasscheibenoberflächen mit einem Schneidrädchen geschnitten bzw. geritzt wird und die Glasscheibe anschließend entlang bzw. an der erzeugten Schneidlinie bzw. Ritzlinie bzw. Ritzspur gebrochen wird. Das Brechen erfolgt durch Biegen der Glasscheibe, z.B. durch Aufwölben der Glasscheibe beidseits der Ritzlinie. Die Begriffe "Schneiden" und "Ritzen" werden auf dem Fachgebiet und auch im Rahmen der vorliegenden Anmeldung synonym für das oberflächliche Ritzen verwendet.

Beim Aufteilen von Verbundglasscheiben werden zunächst beide Glasplatten, insbesondere synchron, oberflächlich geritzt und dann die beiden Glasplatten nacheinander entlang der Ritzlinie gebrochen. Es werden somit beide Glasscheibenoberflächen der Verbundglasscheibe geritzt. Anschließend wird die zwischen den beiden Glasplatten angeordnete Folie durchtrennt. Dies erfolgt z.B. mechanisch mittels eines Messers und/oder thermisch. Das Trennen der Folie kann aber auch vorher mittels eines Lasers erfolgen.

In der DE 101 57 833 B4 ist eine Vorrichtung zum Aufteilen einer Verbundglasscheibe in einzelne Verbundglasscheibenzuschnitte offenbart, die einen Auflagetisch für die Verbundglasscheibe, eine Schneideinrichtung mit einem Ritz-, Brech- und Trennwerkzeug für das Aufteilen sowie eine über dem Auflagetisch zur Schneideinrichtung hin- und zurückfahrbar angeordnete Positionierbrücke zum Verschieben der Verbundglasscheibe auf dem Auflagetisch umfasst. Die Positionierbrücke weist eine Greifeinrichtung mit Greifern zum Greifen der Verbundglasscheibe auf, die derart ausgebildet ist, dass, bezogen auf die gegenläufige Bewegung der Positionierbrücke, die Verbundglasscheibe sowohl in ihrem hinteren, der Schneideinrichtung abgewandten Randbereich als auch in ihrem vorderen, der Schneideinrichtung zugewandten Randbereich greifbar ist.

Ziel beim Aufteilen von Glasscheiben ist insbesondere eine gute und möglichst gleichbleibende Qualität der Bruchkanten, insbesondere für eine gute Kantenfestigkeit. Die Bruchkanten sollen möglichst glatt und eben sowie senkrecht zur Glasscheibenoberfläche sein, um optisch besser zu wirken, eine höhere Fertigungsgenauigkeit zu erzielen und/oder bei einer nachfolgenden Schleifbearbeitung das Endmaß mit weniger Schleifabtrag zu erreichen. Gerade im Bau werden die anwendungstechnischen Grenzen von Flachglas durch die Kantenfestigkeit maßgeblich eingeschränkt. Haben die Bruchkanten keine ausreichende Qualität ist, je nach Anwendungsfall, eine aufwendige Nacharbeit notwendig, um die Passgenauigkeit und/oder die Kantenfestigkeit zu verbessern.

Beim Ritzen werden in der Glasscheibe Tiefen- Radial und Lateralrisse, erzeugt. Das einfache Brechen der Glasscheibe ist auf die beabsichtigte festigkeitsmindernde Wirkung des Tiefenrisses zurück zu führen. Die Lateral- und die Radialrisse sollen allerdings möglichst vermieden bzw. reduziert werden, da sie die Kantenfestigkeit reduzieren. Insbesondere können derartige Mikrorisse in der Bruchkante die Kantenfestigkeit auch nach einer nachfolgenden Schleifbearbeitung noch negativ beeinträchtigen.

Die Bruchkantenqualität kann dabei je nach Anwendung des Glases in unterschiedlicher Gewichtung anhand der Abweichung von einer exakt senkrechten und geradlinigen Kante, anhand von störenden Rissen oder der gemessenen mechanischen Festigkeit der Kante bewertet werden. Die Kantenfestigkeit wird insbesondere bestimmt wie in dem Artikel "Cut edge of annealed float glass: crack system and possibilities to increase the edge strength by adjusting the cutting process", Springer Nature Switzerland AG 2019, der TU Darmstadt beschrieben. Auch kann die Bruchkantenqualität mithilfe der DIN 1249-11-2017-05 beurteilt werden.

Einflussfaktoren für eine schlechte Kantenqualität sind unter anderem eine nicht optimale Maschinentechnik, eine falsche Schneidwerkzeugwahl, falsche Prozessparameter und/oder der Verschleißzustand und/oder Beschädigungen der Schneidrädchen.

Für eine gleichbleibend gute Bruchkantenqualität ist unter anderem der richtige Schneiddruck wichtig. Ist der Schneiddruck beispielsweise zu hoch, führt dies zur vermehrten Ausbildung von ungewünschten Lateral- und Radialrissen.

Auch ein optimaler und exakter Winkel der Schneidkante des Schneidrädchens im Kontaktbereich zur Glasscheibenoberfläche ist für eine gute Bruchqualität entscheidend von Bedeutung. Zudem muss das Schneidrädchen rotationssymmetrisch sein.

Das Schneidrädchen unterliegt zudem einem kontinuierlichen Verschleiß im Kontaktbereich zur Glasscheibenoberfläche, dem in gewissem Maße durch Veränderung von Prozessparametern entgegengewirkt werden kann. Beispielsweise wird die Schneidkante des Schneidrädchens mit der Zeit stumpfer. Um trotzdem eine gute Bruchkantenqualität beizubehalten, muss deshalb im Laufe der Zeit der Schneiddruck erhöht werden. Dies wird vom Bediener einer Glasschneidanlage veranlasst, wenn dieser z.B. anhand des optischen Erscheinungsbildes der Bruchkante feststellt, dass die Bruchkantenqualität schlechter wird.

Gegenüber diesen eher langsamen Veränderungen kritisch sind aber insbesondere auch plötzlich auftretende, lokale Beschädigungen des Kontaktbereichs zur Glasscheibenoberfläche, da diese häufig nicht unmittelbar erkannt werden und zu schlechteren Bruchkantenqualitäten führen können.

Aufgrund dessen müssen der Ritzvorgang und insbesondere die Bruchkantenqualität laufend überwacht und kontrolliert werden. Dabei ist es bekannt, dass erfahrene Bediener einer Glasschneidanlage anhand des optischen Erscheinungsbildes der Ritzlinie und/oder der Bruchkante beim Ritzprozess mitunter die Qualität des Ritzprozesses beurteilen können und, falls notwendig, entsprechende Gegenmaßnahmen einleiten können.

Aus der US 3 880 028 A ist eine Glasschneidevorrichtung mit Überwachung der Bruchkantenqualität bekannt. Die Glasschneidevorrichtung umfasst eine Halteeinrichtung zum Halten einer Glasscheibe in einer Ritzposition, ein Ritzwerkzeug, das so angebracht ist, dass es die Glasscheibe in der Ritzposition berührt, eine Einrichtung zum Erzeugen einer Relativbewegung zwischen dem Glas und dem Ritzwerkzeug, um das Glas zu ritzen, und eine Schallaufnahmevorrichtung für Schallwellen, die beim Ritzen erzeugt werden. Die Schallaufnahmevorrichtung erzeugt ein elektrisches Signal als Funktion der Intensität der Schallwellen.

Die JP H07 257935 A offenbart ein Verfahren zum Schneiden einer Glasplatte, bei dem ein gegen die Glasplatte gedrücktes Schneidrad bewegt wird, um eine Ritzlinie auf der Oberfläche der Glasplatte zu erzeugen. Bei dem Verfahren wird bestimmt, ob die Ritzlinie gut oder schlecht ist, indem die Vibrationen des Schneidrads oder das Schneidgeräusch beim Ritzen gemessen werden.

Aufgabe der vorliegenden Erfindung ist die Bereitstellung eines Schneidverfahrens und einer Schneideinrichtung zum Schneiden bzw. Ritzen von, bevorzugt plattenförmigen, Bauteilen aus Glas oder Keramik, vorzugsweise von Glasscheiben, die eine gute Bruchkantenqualität gewährleisten sollen.

Weitere Aufgabe ist die Bereitstellung eines Verfahrens zum Aufteilen von Glasscheiben, welches ebenfalls eine gute Bruchkantenqualität gewährleisten soll.

Die Aufgaben werden durch ein Schneidverfahren gemäß Anspruch 1, eine Schneideinrichtung gemäß Anspruch 11 sowie ein Verfahren gemäß Anspruch 9 gelöst. Vorteilhafte Weiterbildungen der Erfindung sind in den sich jeweils anschließenden Unteransprüchen gekennzeichnet.

Im Folgenden wird die Erfindung anhand einer Zeichnung beispielhaft näher erläutert. Es zeigen:
- Figur 1:: Stark vereinfacht und schematisch eine Draufsicht auf eine erfindungsgemäße Schneideinrichtung
- Figur 2:: Stark vereinfacht und schematisch eine Seitenansicht eines Schneidkopfes mit einem Schneidrädchen
- Figur 3:: Eine schneidenseitige Ansicht eines Schneidrädchens
- Figur 4:: Ein Frequenzspektrum eines Längsschnitts, geschnitten mit einem mikrostrukturierten Schneidrädchen
- Figuren 5a-c:: Frequenzspektren von Längsschnitten, geschnitten mit konventionellen Schneidrädchen mit unterschiedlichem Schneiddruck
- Figuren 6a+b:: Frequenzspektren eines Querschnitts und eines Längsschnitts, geschnitten mit demselben konventionellen Schneidrädchen
- Figuren 7a-c:: Frequenzspektren konventioneller Schneidrädchen mit unterschiedlichem Verschleißgrad
- Figuren 8a+b:: Das Frequenzspektrum des konventionellen Schneidrädchens mit mittlerem Verschleißgrad aus Figur 7b und einen Ausschlag im Zeitsignal
- Figuren 9a-c:: Zeitbasierte Auswertung der Zeitsignale der Schneidrädchen gemäß den Figuren 7a-c
- Figur 10:: Eine detailliertere Seitenansicht eines Schneidkopfes mit einem Schneidrädchen
- Figur 11:: Eine schematische Darstellung eines Schalldrucksensors mit Schalltrichter und mit Raumwinkelbereich des Schalls, der vom Schalldrucksensor aufgefangen wird

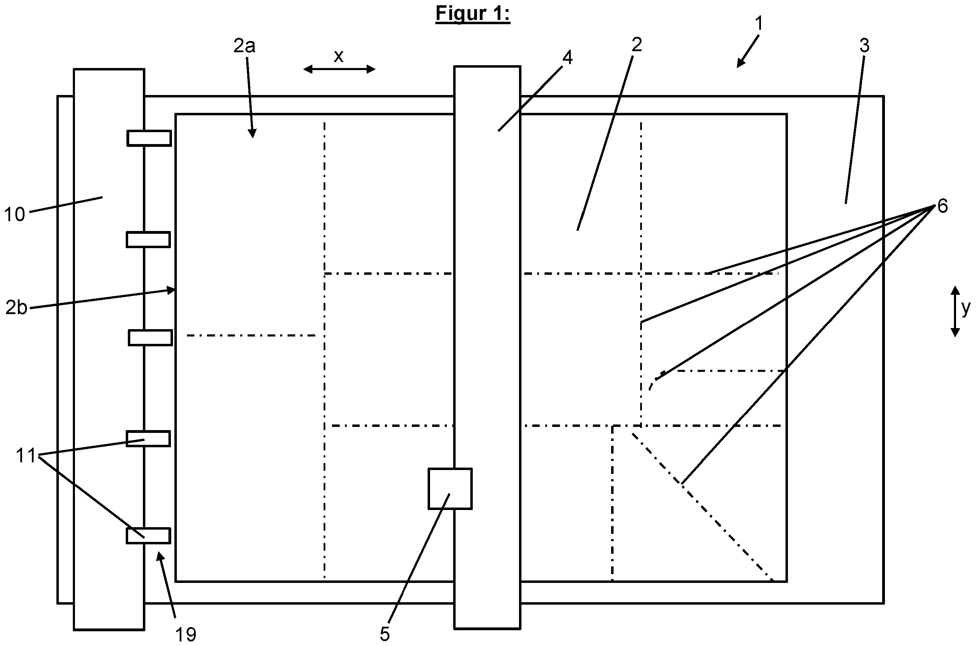

Die erfindungsgemäße Schneideinrichtung 1 (Fig. 1) dient zum Schneiden von Glasscheiben 2 und vorzugsweise auch zum Aufteilen von Glasscheiben 2, z.B. von Einzelglasscheiben oder Verbundglasscheiben, in einzelne Glasscheibenzuschnitte. Dazu weist die Schneideinrichtung 1 einen Auflagetisch 3 zur Aufnahme der zu schneidenden Glasscheibe 2 sowie eine sich in eine horizontale y-Richtung erstreckende Schneidbrücke 4 mit einem Schneidkopf 5 zum Ritzen einer Glasscheibenoberfläche 2a der Glasscheibe 2 und zum Einbringen von Ritzlinien bzw. Ritzspuren 6 in die Glasscheibenoberfläche 2a auf. Die Schneidbrücke 4 überspannt den Auflagetisch 3 oberseitig und/oder unterseitig. Zudem kann die Schneidbrücke 4 feststehend sein oder in eine zur y-Richtung senkrechte, horizontale x-Richtung hin- und her über der Glasscheibe 2 verfahrbar sein. In diesem Fall weist die Schneideinrichtung 1 entsprechende Antriebsmittel zum Verfahren der Schneidbrücke 4 auf.

Der Schneidkopf 5 ist in an sich bekannter Weise in die y-Richtung hin- und her verfahrbar an der Schneidbrücke 4 gelagert. Zum Verfahren des Schneidkopfes 5 weist die Schneidbrücke 4 entsprechende Antriebsmittel auf.

Zudem weist der Schneidkopf 5 ebenfalls in an sich bekannter Weise ein Schneidkopfgehäuse 7, ein Schneidrädchen 8 sowie einen Schneidrädchenträger 9 auf. Der Schneidrädchenträger 9 ist in einer vertikalen und zur Glasscheibenoberfläche 2a senkrechten z-Richtung hin und her verfahrbar an dem Schneidkopfgehäuse 7 gelagert. Hierzu weist der Schneidkopf 5 entsprechende Antriebsmittel auf. Zudem ist der Schneidrädchenträger 9 vorzugsweise um eine zur z-Richtung parallele Trägerdrehachse 9a drehbar an dem Schneidkopfgehäuse 7 gelagert. Der Schneidrädchenträger 9 kann um die Trägerdrehachse 9a frei oder angetrieben drehbar sein. Das Schneidrädchen 8 ist um eine horizontale, zur Glasscheibenoberfläche 2a parallele Raddrehachse 8a frei drehbar an dem Schneidrädchenträger 9 gelagert.

Zudem weist die Schneideinrichtung 1 vorzugsweise zumindest eine Positionierbrücke 10 zum Verfahren der Glasscheibe 2 in x-Richtung auf dem Auflagetisch 3 auf. Die Positionierbrücke 10 überspannt den Auflagetisch 3 ebenfalls ober- und/oder unterseitig und weist z.B. klemmende Greifer 11 zum Greifen der Glasscheibe 2 im Bereich einer Glasscheibenkante 2b und/oder Sauggreifer zum Greifen der Glasscheibe 2 an der Glasscheibenoberfläche 2a auf. Zudem ist die Positionierbrücke 10 in x-Richtung hin und her verfahrbar. Hierzu weist die Schneideinrichtung 1 entsprechende Antriebsmittel auf. Selbstverständlich kann die Schneideinrichtung 1 aber auch andere Mittel zum Verfahren und/oder Greifen der Glasscheibe 2 aufweisen.

Die Schneideinrichtung 1 kann auch Mittel zum Drehen der Glasscheibe 2 um eine zur z-Richtung parallele Drehachse aufweisen. Das Drehen kann z.B. mittels eines Sauggreifers erfolgen.

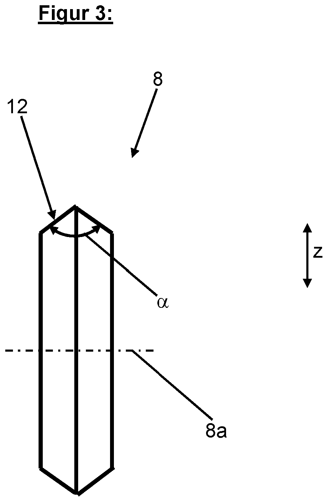

Das Schneidrädchen 8 (Fig. 3) weist eine umlaufende, V-förmige Schneidkante 12 mit einem Schneidenwinkel α auf. Die Schneidkante 12 kann dabei in Umfangrichtung geschliffen (konventionelle Schneidrädchen) oder gezahnt (mikrostrukturierte Schneidrädchen) ausgebildet sein. Diese gezahnten bzw. mikrostrukturierten Schneidrädchen 8 (nicht dargestellt) weisen somit an ihrer Schneidkante 12 eine Zahnstruktur auf.

Grundsätzlich können mit der Schneideinrichtung 1 durch eine Kombination der Bewegung des Schneidkopfes 5 entlang der Schneidbrücke 4 in y-Richtung, der Bewegung der Glasscheibe 2 in x-Richtung und/oder einer Bewegung der Schneidbrücke 4 in x-Richtung und/oder einer Drehung des Schneidrädchenträgers 9 um die Trägerdrehachse in an sich bekannter Weise beliebige Schnittkonturen, insbesondre auch bogenförmige Schnittkonturen erzeugt werden. Hauptsächlich werden allerdings Ritzlinien 6 erzeugt, die parallel zur x-Richtung oder parallel zur y-Richtung sind. Eine zur y-Richtung parallele Ritzlinie 6 wird durch Bewegung des Schneidkopfes 5 in y-Richtung entlang der Schneidbrücke 4 erzeugt (=Querschnitt). Eine zur x-Richtung parallele Ritzlinie 6 wird durch Bewegung der Schneidbrücke 4 und/oder der Glasscheibe 2 in x-Richtung erzeugt (=Längsschnitt). Beim Ritzen rollt das Schneidrädchen 8 in an sich bekannter Weise auf der Glasscheibenoberfläche 2a entlang und ritzt diese an bzw. schneidet diese ein.

Auch kann die Glasscheibe 2 während des Ritzvorgangs um eine zur z-Richtung parallele Drehachse gedreht werden, um bogenförmige Ritzlinien zu erzeugen.

Zudem weist die Schneideinrichtung 1 vorzugsweise in an sich bekannter Weise Mittel zum Brechen der Glasscheibe 2 nach dem Ritzen auf. Beispielsweise weist die Schneideinrichtung 1 eine Brechrolle auf, die ebenfalls am Schneidkopf 5 gelagert ist. Es kann aber zum Beispiel auch eine Brechleiste mit Niederhaltern vorhanden sein. Die Schneideinrichtung 1 dient in diesem Fall nicht nur zum Schneiden, sondern auch zum Aufteilen von Glasscheiben 2.

Handelt es sich bei der Schneideinrichtung 1 um eine Verbundglasschneideinrichtung, weist diese zudem zusätzlich Trennmittel zum Trennen der Verbundglasfolie auf. Beispielsweise handelt es sich um ein mechanisches Trennmittel, z.B. ein Trennmesser. Alternativ oder zusätzlich kann das Trennen auch thermisch erfolgen. Auch kann es mittels eines Lasers erfolgen. Das Trennen kann z.B. nach dem Brechen oder bereits davor mittels des Lasers erfolgen. Auch kann die Verbundglasfolie vor dem Brechen mittels Laser geschwächt werden.

Zudem ist die Schneidbrücke 4 bei einer Verbundglasschneideinrichtung als Doppelschneidbrücke ausgebildet. Die Doppelschneidbrücke weist einen oberen und einen unteren Schneidbrückenteil auf. Der obere Schneidbrückenteil überspannt den Auflagetisch 3 oberseitig, der untere Schneidbrückenteil überspannt den Auflagetisch 3 unterseitig. Sowohl am oberen als auch am unteren Schneidbrückenteil ist ein Schneidkopf 5 gelagert. Die beiden Schneidköpfe 5 sind insbesondere synchron in y-Richtung verfahrbar an dem jeweiligen Schneidbrückenteil gelagert. Zudem ist der Auflagetisch 3 in an sich bekannter Weise im Bereich der Doppelschneidbrücke geteilt bzw. geschlitzt bzw. weist einen sich in y-Richtung erstreckenden Spalt bzw. Schlitz auf. Der Spalt dient zur Aufnahme der Schneid- und Brech- und Trennmittel.

Im Rahmen der Erfindung wurde nun überraschenderweise herausgefunden, dass es möglich ist, die Bruchkantenqualität zu überwachen und zu verbessern, wenn der Ritzvorgang mittels Schallemissionsanalyse überwacht bzw. analysiert wird. Dies erfolgt vorzugsweise online bzw. in Echtzeit.

Bei der Schallemissionsanalyse bzw. Schallemissionsprüfung (Acoustic Emission Testing) wird ausgenutzt, dass plötzliche Veränderungen im Gefüge eines Werkstoffs, die durch chemische oder thermische Vorgänge oder unter mechanischer Belastung ausgelöst werden, zur Emission von Schall führen. Anhand von Aufzeichnung und Analyse dieser Schallemissionssignale kann dann z.B. die Fertigungsqualität oder der Schadenszustand von Materialverbunden, Komponenten und Bauteilen charakterisiert werden. Zur Detektion der Schallemissionssignale werden Sensoren verwendet, z.B. piezoelektrische Sensoren.

Diese können die transienten Auslenkungen im Material, wenn die Welle es durchläuft, in ein Spannungssignal umwandeln, welches digitalisiert und mit Software zur Datenanalyse weiter ausgewertet werden kann.

Die Schallemissionsanalyse hat aber auch ihre Grenzen. Problematisch sind zum Beispiel das Vorhandensein von Störquellen (z. B. Maschinengeräusche, elektromagnetisches Rauschen oder Rissuferreibung).

Im vorliegenden Fall sind beispielsweise sehr viele mechanische Fügestellen in der Schnittstellenkette - Schneidrädchen 8 - Radachse 8a - Schneidrädchenträger 9 - Rädchenträgeraufnahme - Schneidkopf 5 - vorhanden, welche insbesondere hochfrequente Schwingungen dämpfen. Die sehr kleine Bauteilgröße behindert außerdem die Anbringung einer Sensorik in unmittelbarer Nähe des Schneidrädchens 8. Beim Ritzvorgang werden zudem hohe relevante Frequenzspannen erzeugt. Die Drehfrequenz eines Schneidrädchens 8 bei einer Schnittgeschwindigkeit von 1 m/s und einem Rädchendurchmesser von 5,6 mm beträgt z.B. 57 Hz. Und die Zahneingriffsfrequenz bei einem mikrostrukturierten Schneidrädchen mit einem Zahnabstand von 50µm und einer Schnittgeschwindigkeit von 3 m/s beträgt z.B. 60 kHz.

Im Rahmen der Erfindung wurde dennoch festgestellt, dass es möglich ist, anhand der Aufzeichnung und Analyse der Schallemissionssignale eines Ritzvorganges den Ritzvorgang bzw. die Qualität des Ritzvorgangs zu überwachen, bestimmte störende Phänomene zu erkennen und zu charakterisieren. Insbesondere wurde festgestellt, dass einige Schneidparameter, z.B. der Schneiddruck und/oder der Verschleißzustand des Schneidrädchens 8 und/oder die Verschleißart des Schneidrädchens 8 und/oder die Schneidgeschwindigkeit mittels Schallemissionsanalyse überwacht, eingestellt, gesteuert und/oder geregelt werden können.

Dazu werden die beim Ritzvorgang entstehenden akustischen Wellen (=Schallsignale bzw. Schallemissionssignal) mittels zumindest eines AE-Sensors bzw.

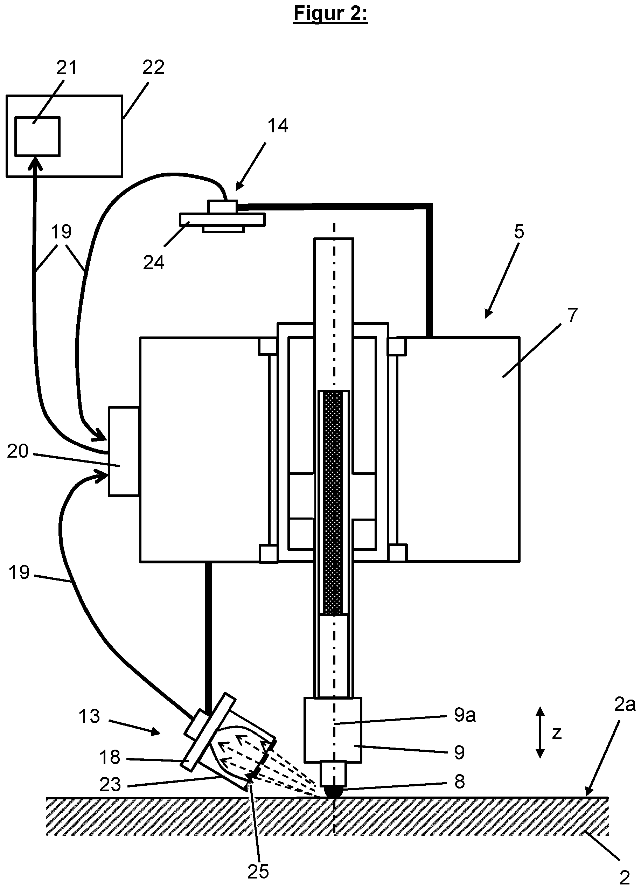

Schalldrucksensors bzw. Mikrofons 13 (Fig. 2), insbesondere einem piezoelektrischen Sensor, detektiert, in elektrische analoge Zeitsignale umgewandelt, digitalisiert und aufgezeichnet. Der Schalldrucksensor 13 weist in an sich bekannter Weise eine Platine 18 auf.

Zur Digitalisierung weist der Schalldrucksensor 13, insbesondere die Platine 18, vorzugsweise eine Digitalisierungseinrichtung, z.B. einen Analog-Digital-Wandler, auf. Durch die frühzeitige Digitalisierung können Störungen beim Signaltransport reduziert oder vermieden werden.

Vorzugsweise ist der Schalldrucksensor 13, insbesondere mittels Kabeln 19, an einen weiteren Signal-Wandler 20, angeschlossen. Die Signalaufzeichnung erfolgt in einer Auswerteeinrichtung 21. Nach der Signalaufzeichnung erfolgt, bevorzugt online, ebenfalls mittels der Auswerteeinrichtung 21 eine Signalanalyse. Die Auswerteeinrichtung 21 ist vorzugsweise Teil einer Steuereinrichtung 22 der Schneideinrichtung 1.

Die Signalanalyse kann dabei im Zeitbereich und/oder im Frequenzbereich (Frequenzanalysen) erfolgen.

Insbesondere wird im Rahmen der Signalanalyse und -auswertung mindestens ein Ist-Schneidradsignal erzeugt und mit mindestens einer zuvor ermittelten bzw. festgelegten Soll-Charakteristik des Schneidradsignals verglichen. Dies kann automatisiert mittels einer Software der Auswerteeinrichtung 21 und/oder auch durch eine Bedienperson erfolgen. Das die Soll-Charakteristik aufweisende Schneidradsignal und das entsprechende Ist-Schneidradsignal können jeweils ein auf Basis der gemessenen Schallemissionssignale erzeugtes elektrisches, analoges oder digitales Signal sein. Es kann sich zum Beispiel um ein analoges oder digitales Zeitsignal oder ein Frequenzspektrum handeln.

Die Ermittlung der Soll-Charakteristik des Schneidradsignals erfolgt z.B. auf Basis von Erfahrungswerten. Beispielsweise existieren auf dem Fachgebiet bereits Tabellen, in denen für verschiedene zu schneidende Glasscheiben bestimmte Schneidradtypen mit zugehörigen Schneidparametern, wie z.B. Schneidgeschwindigkeit und/oder Schneiddruck, angegeben sind, welche für eine gute Bruchkantenqualität verwendet/eingestellt werden sollten. Mit diesen vorgegebenen Einstellungen können dann Ritzvorgänge durchgeführt werden und das entsprechende Schneidradsignal mit Soll-Charakteristik aufgezeichnet werden. Falls die Bruchkantenqualität trotz der Vorgaben nicht ausreichend ist, müssen selbstverständlich die Schneidparameter entsprechend angepasst werden, um die Soll-Charakteristik des Schneidradsignals festzulegen. Es werden also Merkmale der aufgezeichneten Signale mit der Beurteilung der Kantenqualität korreliert.

Die Schneidradtypen unterscheiden sich beispielsweise durch ihre Schliffart und/oder dem Schneidenwinkel und/oder dem Durchmesser, worauf weiter unten näher eingegangen wird. Dabei weisen die unterschiedlichen Schneidradtypen jeweils ein charakteristisches Schneidradsignal auf. Beispielsweise unterscheiden sich die Schneidradsignale von mikrostrukturierten gegenüber nicht strukturierten Schneidrädchen. Aber auch unterschiedliche nicht mikrostrukturierte Schneidrädchen weisen A-Priori leicht unterschiedliche Signalformen auf.

Im Wege der Signalanalyse- und -auswertung werden somit Merkmale extrahiert und daraus auf Basis gesammelter Daten und Erfahrungen Rückschlüsse gezogen. Dabei können auch Verfahren des der künstlichen Intelligenz, insbesondere des maschinellen Lernens verwendet werden. Beispielsweise können auf Basis größerer Datenmengen Kausalzusammenhänge und Muster erkannt/hergeleitet werden. Vorhersagen und Schlussfolgerungen können mittels eines Prädiktionsalgorithmus berechnet werden.

Beispielsweise können aus gesammelten Daten betreffend den Verschleißzustand und/oder die Verschleißart in Korrelation mit der festgestellten Kantenqualität Rückschlüsse gezogen und z.B. auch Grenzwerte bezüglich der Soll-Charakteristik des Schneidradsignals festgelegt werden und Voraussagen bezüglich der Lebensdauer des Schneidrädchens getroffen werden. Insbesondere kann festgelegt werden, dass das Schneidrädchen ab einem bestimmten Verschleißgrad, der mit einer bestimmten Charakteristik des Schneidradsignals korreliert, ausgetauscht werden muss. Und es kann überwacht werden, ob das Schneidrädchen einem normalen Abnutzungsgrad unterliegt. Die Soll-Charakteristik kann somit auch vom Verschleißgrad und/oder der Verschleißart abhängen.

Erfolgt die Signalanalyse auf Basis von Frequenzanalysen, wird das aufgezeichnete digitale Zeitsignal, vorzugsweise mittels einer Fourier-Transformation, in den Frequenzbereich transformiert. Die dabei erzeugten Ist-Frequenzspektren werden dann weiter analysiert und ausgewertet, vorzugsweise mit Soll-Charakteristiken verglichen. Dies kann automatisiert mittels einer Software der Auswerteeinrichtung und/oder auch durch eine Bedienperson erfolgen. Beispielsweise weist, wie oben beschrieben ein Schneidrädchen eine Soll-Charakteristik des Frequenzspektrums auf, welches dann mit dem gemessenen Ist-Frequenzspektrum verglichen wird. Insbesondere werden einzelne Frequenzbereiche der Soll-Charakteristik und des Ist-Frequenzspektrums miteinander verglichen.

Bekanntermaßen werden mittels Fourier-Transformation kontinuierliche, aperiodische Signale in ein kontinuierliches Frequenzspektrum zerlegt. Es kann also ein digitales Signal in seine Frequenzanteile zerlegt und anschließend analysiert werden.

Wie bereits erläutert, wird die Überwachung bzw. Schallemissionsanalyse vorzugsweise online durchgeführt.

Erfindungsgemäß werden dabei zumindest, gegebenenfalls ausschließlich, Schallemissionssignale im nicht hörbaren Ultraschallbereich (16 kHz bis 1,6 GHz) aufgezeichnet und/oder analysiert. Denn im Rahmen der Erfindung wurde festgestellt, dass in diesem Frequenzbereich eine genauere Bewertung und Überwachung des Ritzvorgangs möglich ist.

Des Weiteren ist der Schalldrucksensor 13 in der Nähe des Schneidrädchens 8 angeordnet und am Schneidkopf 5 befestigt. Dies ist schematisch in Figur 2 dargestellt. Der Schalldrucksensor 13 dient somit zur Detektion von Nahemissionsschallsignalen bzw. der nahen Schallemissionssignale.

Der Schalldrucksensor 13 ist zudem vorzugsweise zum Schneidrädchen 8 gerichtet (Richtmikrofon). Dazu weist der Schalldrucksensor 13 einen Schalltrichter 23 auf. Dadurch kann die Detektion von Störgeräuschen deutlich reduziert werden und das Messergebnis verbessert werden. Insbesondere werden Störgeräusche aus der Umgebung, die beispielsweise von den Bewegungsachsen und Antrieben erzeugt werden, unterdrückt und breitbandige Schneidgeräusche evtl. ebenfalls verstärkt.

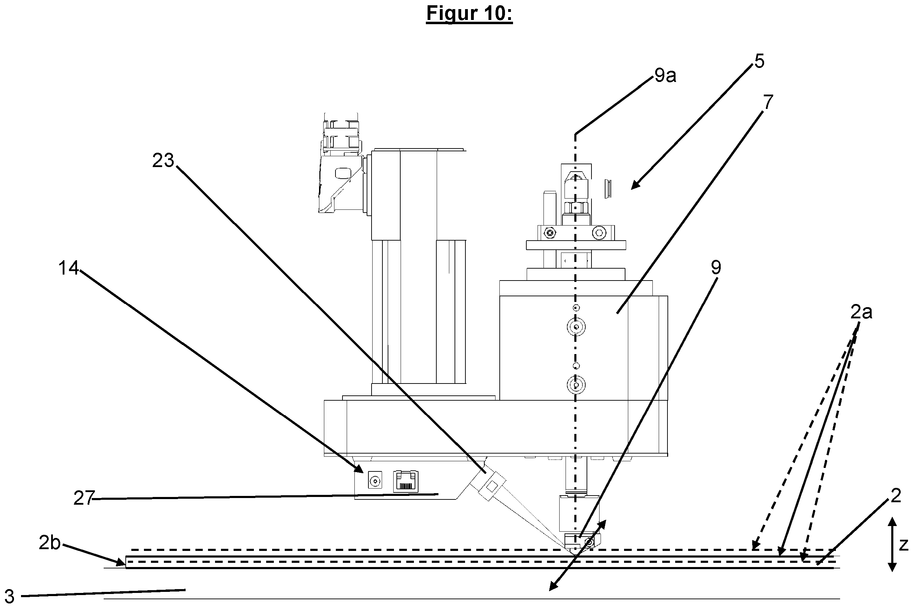

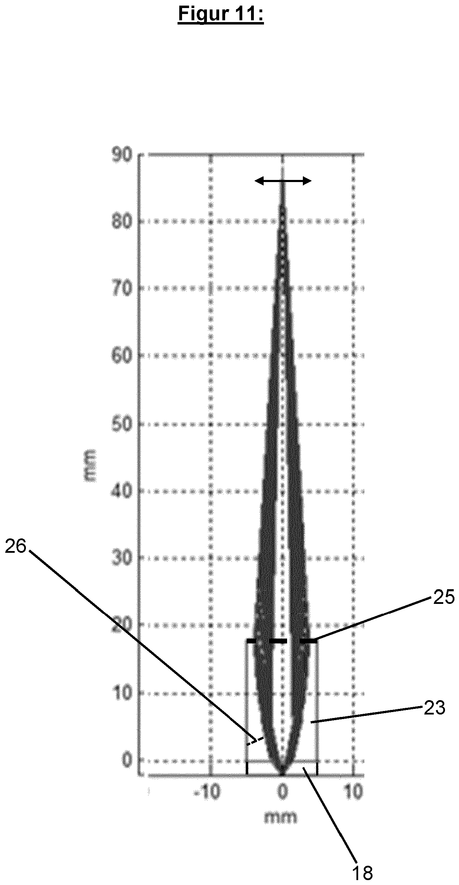

Dabei wurde im Rahmen der Erfindung überraschenderweise heraus gefunden, dass, insbesondere aufgrund des Schalltrichters 23, Glasscheiben 2 mit unterschiedlichen Dicken geschnitten werden können, ohne dass die Position des Schalldrucksensors 13 relativ zum Auflagetisch 3 in z-Richtung verändert werden muss. Denn bei unterschiedlich dicken Glasscheiben 2 verschiebt sich zwangsweise die Glasscheibenoberfläche 2a in z-Richtung relativ zum Schalldrucksensors 13 (siehe Figur 10). Dies bedeutet, dass sich auch die Schallquelle (der Punkt, an dem das Schneidrädchen 8 an der Glasscheibenoberfläche 2a anliegt) relativ zum Schalldrucksensors 13 verschiebt. Die Richtung der Verschiebung ist in Figuren 10 und 11 als Doppelpfeil gekennzeichnet. Dadurch ist die Schallquelle nicht mehr exakt mittig bzw. zentriert in Bezug zum Schalltrichter 23 angeordnet und der Laufweg der einzelnen Schallwellen nicht mehr gleich. Beispielsweise beträgt die Glasdicke der zu schneidenden Glasscheiben 2 zwischen 3 bis 19 mm. Dies entspricht in etwa einer Verschiebung von 5,6 mm. Dennoch wurde im Rahmen der Erfindung festgestellt, dass die Signalqualität immer noch ausreichend gut ist, da sich die Laufwege auch bei einer Verschiebung von 5,6 mm deutlich weniger verändern. Die halbe Schallwellenlänge, die zu einer örtlichen Auslöschung des Schalls führen könnte, liegt bei 90kHz beispielsweise bei 1,9 mm.

Des Weiteren weist der Schalldrucksensor 13 vorzugsweise eine Schutzmembran 25 auf, die vor bzw. am offenen Ende des Schalltrichters 23 angeordnet ist. Insbesondere deckt die Schutzmembran 25 den Schalltrichter 23 an seinem offenen, dem Schneidrädchen 8 zugewandten, Ende ab.

Die Schutzmembran 25 schützt den Schalltrichter 23 vor dem Eindringen von festen und flüssigen Schmutzpartikeln, z.B. vor dem Eindringen von Schneidöl. Sie sind somit insbesondere auch als Spritzschutz. Die Schutzmembran 25 ist somit einerseits zwar schalldurchlässig aber andererseits derart ausgebildet, dass die festen und flüssigen Schmutzpartikeln nicht hindurch dringen können. Vorzugsweise besteht die Schutzmembran 25 aus einem Gewebe. Das Gewebe besteht zudem vorzugsweise aus Metall, bevorzugt aus Edelstahl. Zudem weist das Gewebe vorzugsweise eine Maschenweite (=Abstand zwischen den Gewebefäden) von 40 bis 500 µm, bevorzugt 55 bis 100 µm, auf. Die Schutzmembran 25 sollte dabei möglichst dünn sein, um die kurzen Schallwellen möglichst wenig zu dämpfen. Vorzugsweise weisen die Gewebefäden eine Fadendicke (Durchmesser) von 30 bis 50 µm auf.

Alternativ dazu kann das Gewebe auch aus Kunststoff bestehen. Da Metall eine geringere Dämpfung aufweist als Kunststoff, ist Metall, insbesondere Edelstahl, allerdings bevorzugt.

Weiterhin weist der Schalltrichter 23 vorzugsweise zumindest eine Lüftungsöffnung 26 (schematisch in Figur 11 eingezeichnet) auf, die ebenfalls die Verschmutzung des Schalldrucksensors 13 verhindern soll. Die Lüftungsöffnung 26 erstreckt sich durchgehend von außen nach innen durch eine Trichterwandung des Schalltrichters 23 hindurch. Durch die Lüftungsöffnung 26 entsteht ein Luftzug, der für die kontinuierliche Reinigung bzw. den kontinuierlichen Austausch der Luft in dem Schalltrichter 23 sorgt. Dadurch werden Schmutzpartikel kontinuierlich aus dem Inneren des Schalltrichters 23 abgeführt. Dabei wurde festgestellt, dass trotz des Luftzuges, insbesondere aufgrund der hohen Frequenzen der Signale, die Signalqualität nicht beeinträchtigt wird.

Zur Störsignalunterdrückung kann zudem in vorteilhafter Weiterbildung der Erfindung zumindest ein weiterer Schalldrucksensor 14 vorhanden sein, der weiter entfernt von dem Schneidrädchen 8 angeordnet ist als der erste Schalldrucksensor 13. Der weitere Schalldrucksensor 14 dient somit zur zusätzlichen Detektion von Fernschallemissionssignalen. Er detektiert zu einem größeren Anteil Umgebungsgeräusche bzw. Störgeräusche. Beispielsweise handelt es sich bei den Störgeräuschen um dauernde oder kurzzeitige Nebengeräusche, z.B. in der Halle, in der die erfindungsgemäße Schneideinrichtung 1 angeordnet ist. Vorzugsweise ist der weitere Schalldrucksensor 14 ebenfalls am Schneidkopf 5 angeordnet.

Vorzugsweise ist der weitere Schalldrucksensor 14 zudem analog zu dem ersten Schalldrucksensor 13 ausgebildet und weist somit ebenfalls eine Platine 24, bevorzugt mit einer Digitalisierungseinrichtung, auf. Er ist allerdings vorzugsweise nicht als Richtmikrofon ausgebildet.

Vorzugsweise ist der weitere Schalldrucksensor 14 ebenfalls, insbesondere mittels Kabeln 19, an den weiteren Signal-Wandler 20 und über diesen an die Auswerteeinrichtung 21 angeschlossen.

Die Länge der Kabel 19 beträgt vorzugsweise jeweils ≤ 0,5 m.

Vorzugsweise sind der erste und der weitere Schalldrucksensor 13;14 sowie der Signal-Wandler 20 und die Auswerteeinrichtung 21 und die Steuereinrichtung 22 in einem am Schneidkopf 5 befestigten Gehäuse 27 angeordnet (Fig. 10).

Mittels der Auswerteeinheit 21 wird dann vorzugsweise eine Signalanalyse der Schallemissionssignale der beiden Schalldrucksensoren 13;14 durchgeführt und die Ergebnisse miteinander verrechnet. Das heißt, aus den Nahschallemissionssignalen werden die Störgeräusche mittels Störgeräuschunterdrückung heraus gerechnet. Das Resultat ist ein auf Basis zumindest zweier Schalldrucksensoren 13;14 errechnetes, charakteristisches Schneidradsignal. Das Schneidradsignal steht wiederum insbesondere in hoher Korrelation mit einem guten oder schlechten Schneidverhalten.

Um den Rechenaufwand zu verringern, kann aber zum Beispiel auch in vorteilhafter Weise lediglich anhand der Fernschallemissionssignale festgelegt werden, ob die Nahschallemissionssignale ausgewertet werden oder nicht. Bei Überschreiten eines Grenzwerts für anhand der Analyse der Fernschallemissionssignale festgestellten Störgeräusche werden die Nahschallemissionssignale nicht zur Auswertung zugelassen, damit die Störsignale nicht mit ausgewertet werden, weil dies sonst zu Fehlinterpretationen führen könnte. Die Fernschallemissionssignale dienen in diesem Fall somit quasi als Steuersignale.

Für eine weitere Optimierung und eine Verbesserung der Genauigkeit der Überwachung, ist es zudem auch möglich, nicht während des gesamten Schneidvorgangs die Schallemissionssignale aufzuzeichnen und/oder auszuwerten. Beispielsweise werden nur die Schallemissionssignale detektiert und/oder ausgewertet, die dann entstehen, wenn Störgeräuschquellen weit vom Schneidrädchen 8 entfernt sind. Dies ist zum Beispiel bei Längsschnitten der Fall, wenn die Linearführungen und Antriebe weit entfernt sind.

Im Folgenden werden die Vorteile der Erfindung anhand von Ausführungsbeispielen näher erläutert:
Im Rahmen der Ausführungsbeispiele wurden die Schallemissionssignale jeweils eines Ritzvorgangs mit zwei Schalldrucksensoren (Nahschalldrucksensor und Fernschalldrucksensor) detektiert, aufgezeichnet und ausgewertet. Dabei wurden sowohl Längs- als auch Querschnitte durchgeführt. Die Durchführung der Längsschnitte erfolgte durch Bewegung der Schneidbrücke in x-Richtung. Die Durchführung der Querschnitte erfolgte durch Bewegung des Schneidkopfes entlang der Schneidbrücke in y-Richtung. Verwendet wurde eine Schneideinrichtung vom Typ Rapidline der Anmelderin.

Zur Aufzeichnung der Nahschallemissionssignalen und der Fernschallemissionssignalen wurden identische Mikrofone verwendet. Dabei wurden die Signale jeweils bereits unmittelbar auf der Platine, auf der sich die Mikrofone befanden, digitalisiert. Beide Signale wurden in einer am Schneidkopf befestigten Wandlerbox zusammengefasst und über ein Kabel in Echtzeit an die Auswerteeinrichtung übertragen. Der Nahschalldrucksensor befand sich in einem Abstand von ca. 60 mm schräg vor dem Schneidrädchen und 40 mm oberhalb der Glasscheibenoberfläche. Vor dem Nahschalldrucksensor war ein etwa 30 mm langes Metalldrehteil mit einem Durchmesser von ca. 20 mm positioniert. Dieses war innen so bearbeitet und so gegenüber dem Kontaktbereich zwischen Schneidrädchen und der Glasscheibenoberfläche ausgerichtet, dass das im Kontaktbereich zwischen Schneidrädchen und Glasscheibe entstehende Nahemissionsschallsignal möglichst gleichphasig auf den Nahschalldrucksensor traf und so eine Richtwirkung bzw. Verstärkung entstand. Der Fernschalldrucksensor war in einem Abstand von ca. 200 mm vom Kontaktbereich zwischen Schneidrädchen und Glasscheibenoberfläche entfernt und oberhalb vom Schneidkopf positioniert, so dass er vorwiegend die Umgebungsgeräusche aufzeichnete. Der Fernschalldrucksensor war nicht mit einer Richtcharakteristik ausgestattet.

Bei der Signalauswertung wurden die beiden Sensorsignale nicht im Sinne einer Störgeräuschunterdrückung verrechnet. Vielmehr wurde auf eine Signalauswertung der Nahschallemissionssignale verzichtet, wenn Störgeräusche eine bestimmte Stärke überschritten.

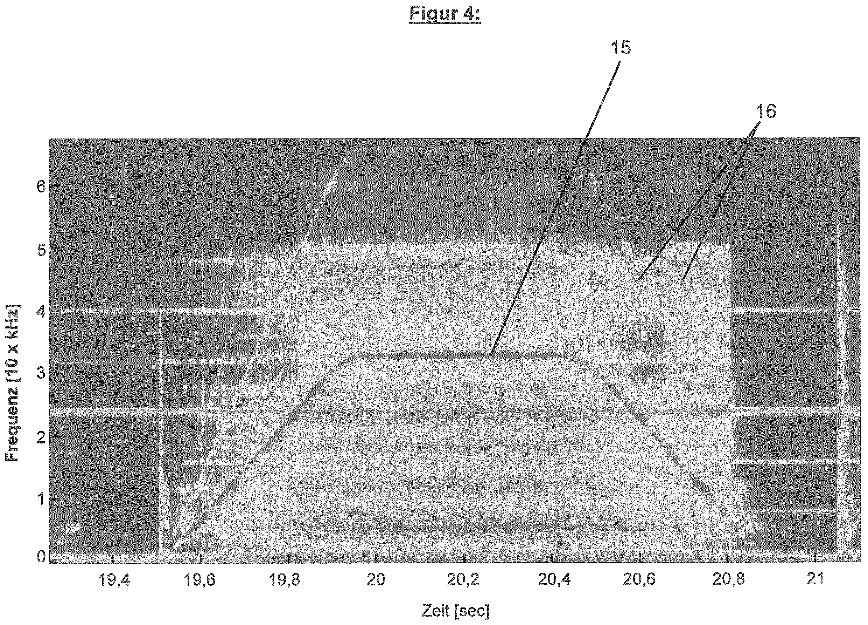

Die Transformation der digitalen Zeitsignale in den Frequenzbereich bei den in den Figuren 4 bis 7 dargestellten Frequenzspektren erfolgte jeweils mittels Online-FFT (Fast-Fourier-Transformation). Dabei wurde ein Fenster mit einer Breite von 2 ms verwendet, welches in Schritten von 1 ms verschoben wurde. Als Fensterfunktion wurde das Hanning Fenster verwendet. Damit wurde eine Fensterbreite von 375 Samples und eine Zeitauflösung von 1 ms bei einer Überschneidung von 50% erhalten. Die Frequenzauflösung betrug 501,3 Hz. Die Signalaufzeichnung erfolgte zudem mit einer Abtastrate von 187,5 KHz. Hierdurch können bekannterweise Frequenzen bis zur Hälfte dieser Frequenz, also 93,75 kHz aufgelöst werden (https://de.wikipedia.org/wiki/Nyquist-Shannon-Abtasttheorem).

In Figur 4 ist ein Frequenzspektrum eines mit einem mikrostrukturierten Schneidrädchen durchgeführten Längsschnitts dargestellt. Die Beschleunigung des Schneidkopfes betrug 4 m/s², die Konstantschneidgeschwindigkeit lag bei 100 m/min und abgebremst wurde mit 6 m/s² bei einem Zahnabstand auf dem Schneidrädchen von 50 µm.

Gut zu erkennen in Figur 4 ist die Hüllkurve 15, die zunächst bei der Beschleunigung ansteigt, dann bei der Konstantschneidgeschwindigkeit geradlinig verläuft und beim Abbremsen wieder abfällt. Zudem ist zu erkennen, dass die Hüllkurve 15 einen welligen Verlauf hat. Eine Periode der Wellen entspricht dabei einer Umdrehung des Schneidrädchens. Über der Hüllkurve 15 sind Oberschwingungen 16 eingezeichnet.

Aus der Welligkeit wurde die durchschnittliche Zahneingriffsfrequenz im Bereich der Konstantschneidgeschwindigkeit mit 32,8 kHz bestimmt. Dies entspricht einer Konstantschneidgeschwindigkeit von 98,4 m/Minute. Die Soll-Zahneingriffsfrequenz lag bei 33,3 kHz (berechnet aus der Soll-Konstantschneidgeschwindigkeit/Zahnabstand). Der Schlupf betrug somit 1,6 %.

Aus der Welligkeit konnte zudem berechnet werden, dass die Zahneingriffsfrequenz schwankt (32,3 kHz - 33,3 kHz). Das bedeutet, dass das Schneidrädchen pro Umdrehung scheinbar in einigen Winkelpositionen einmal pro Umdrehung, das heißt mit ca. 94,9 Hz, stockt. Die Welligkeit deutet somit auf eine Asymmetrie des Schneidrädchens hin.

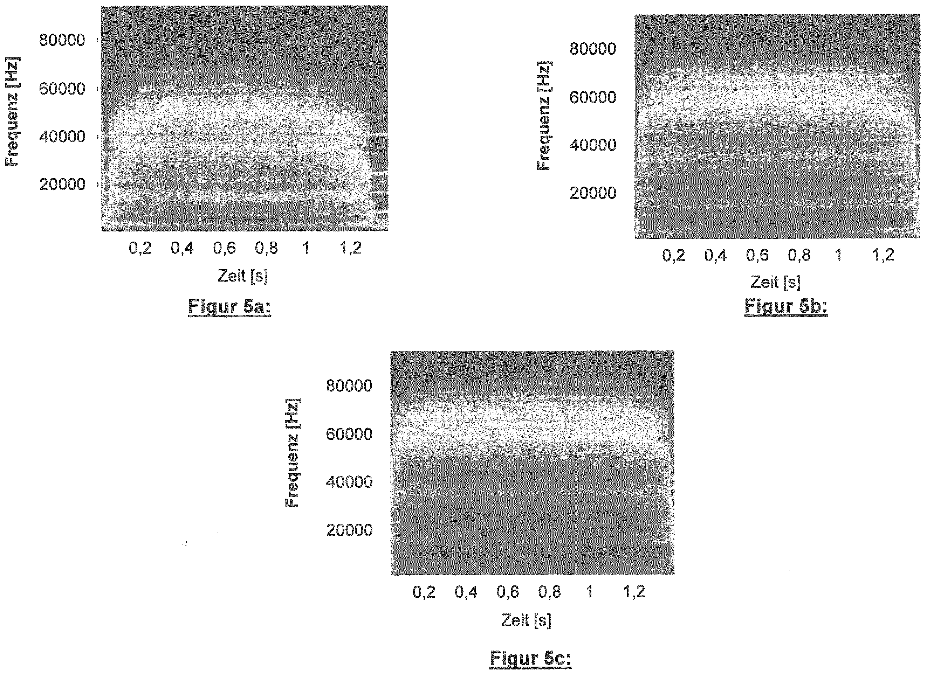

In den Figuren 5a-c sind Frequenzspektren jeweils eines Längsschnittes dargestellt. Geschnitten wurde jeweils mit einem nicht mikrostrukturierten, konventionellen Schneidrädchen mit einem Rädchendurchmesser von 4,1 mm, einem Schneidenwinkel von 145°. Zudem wurde eine Einzelscheibe von 4 mm Glasdicke geschnitten. Dabei wurde der Schneidparameter Schneiddruck variiert (Figur 5a 0,3 bar, Figur 5b 0,7 bar, Figur 5c 1,1 bar).

Der Anstieg im Schneiddruck ist deutlich zu erkennen durch einen stärker ausgeprägten hochfrequenten Bereich. Insbesondere führt eine Erhöhung des Schneiddrucks zu einem deutlichen Anstieg der breitbandigen Schneidgeräusche über den gesamten Frequenzbereich bis 50 kHz.

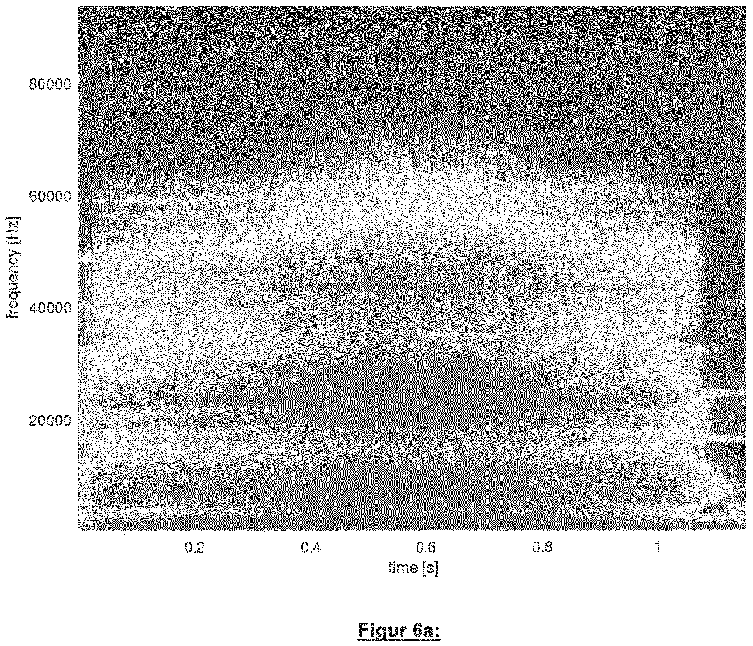

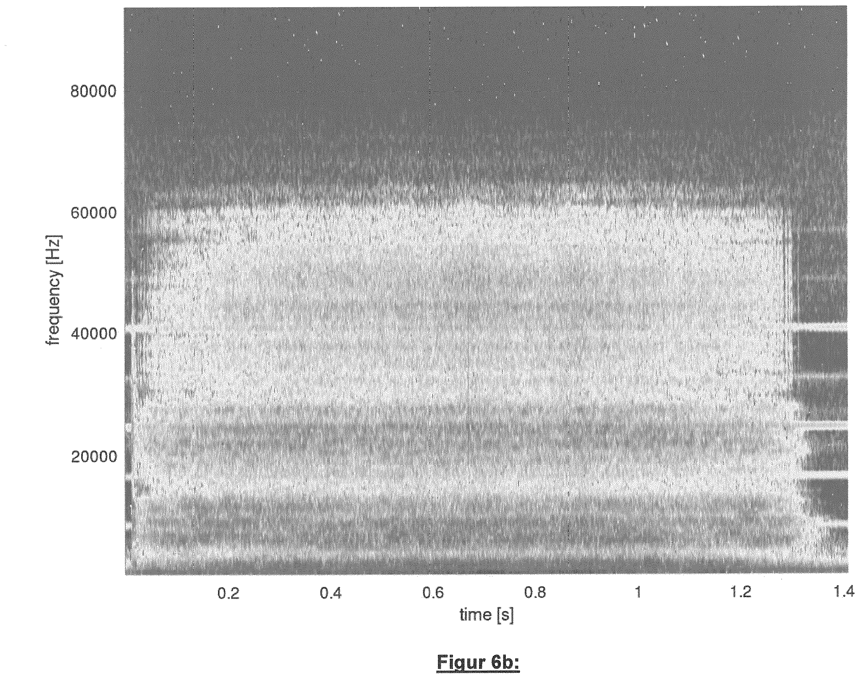

In Figuren 6a und 6b sind die Frequenzspektren eines Querschnitts (Figur 6a) und eines Längsschnitts (Fig. 6b), jeweils geschnitten mit demselben nicht mikrostrukturierten Schneidrädchen dargestellt.

Zu erkennen ist, dass das Frequenzspektrum des Längsschnitts weniger Störungen aufweist. Denn im Frequenzspektrum des Querschnitts ist in drei Frequenzbereichen ein starkes breitbandiges Rauschen zu erkennen. Dies ist darauf zurückzuführen, dass Störquellen, insbesondere Linearführungen, beim Längsschnitt weiter entfernt sind.

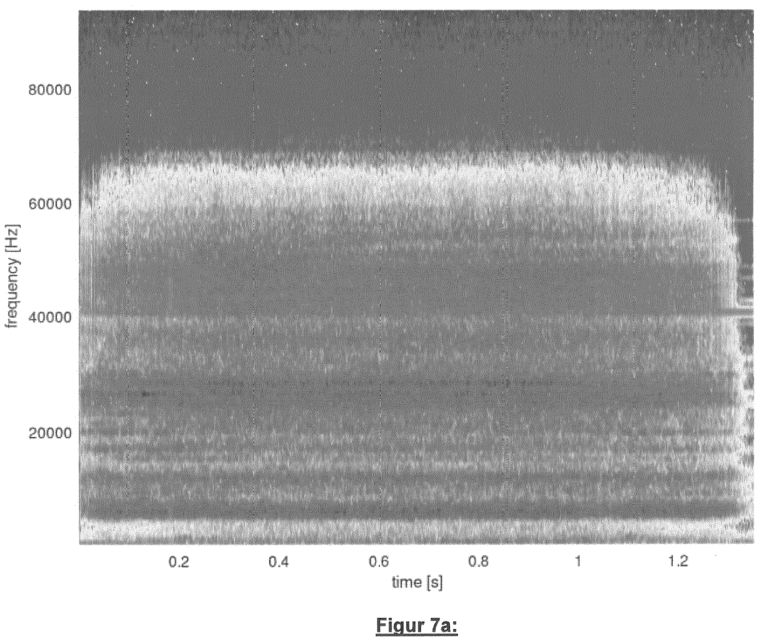

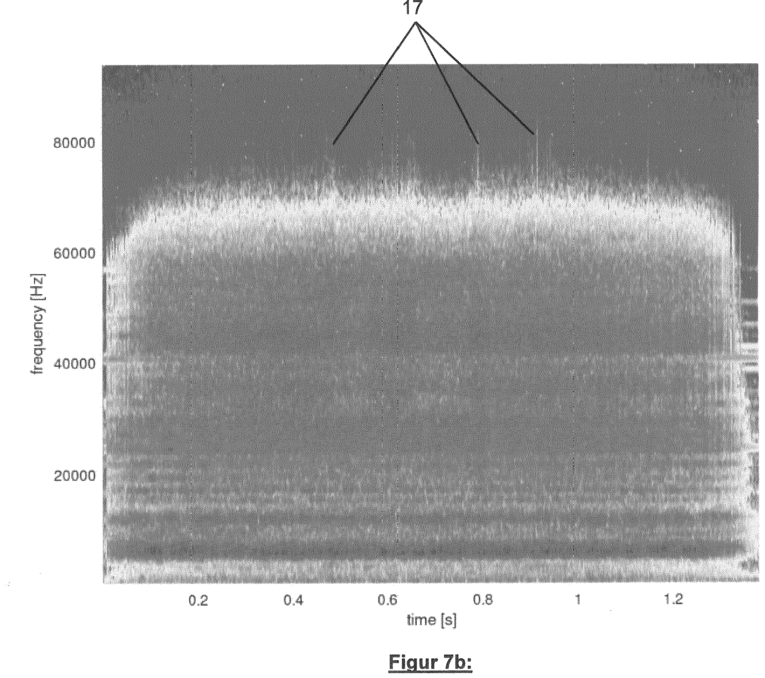

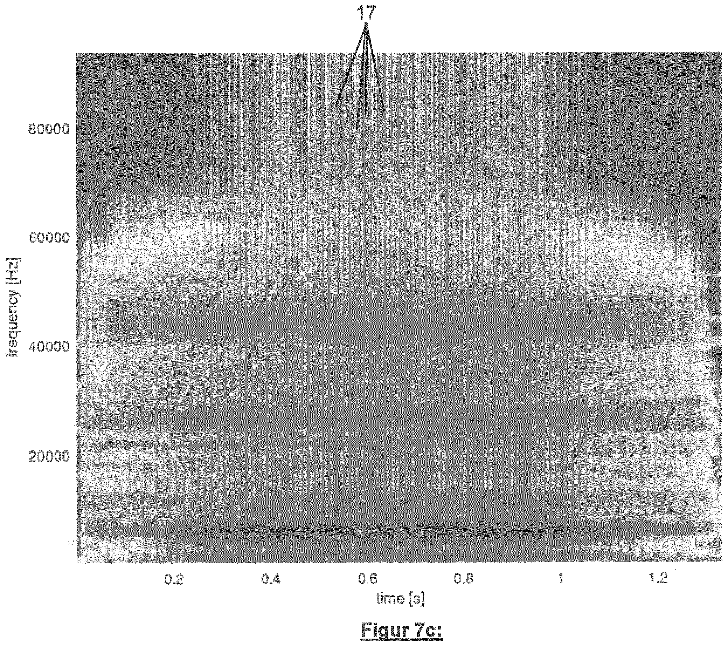

Des Weiteren wurden in weiteren Ausführungsbeispielen konventionelle Schneidrädchen mit unterschiedlichem Verschleißzustand getestet. Die zugehörigen Frequenzspektren sind in den Figuren 7a-c dargestellt. Figur 7a zeigt das Frequenzspektrum eines neuen Schneidrädchens. Figur 7b zeigt das Frequenzspektrum eines Schneidrädchens mit mittlerem Verschleißgrad und Figur 7c zeigt das Frequenzspektrum eines verschlissenen Schneidrädchens mit Scharte.

Zu erkennen ist, dass mit zunehmendem Verschleiß die "Ereignisse" bzw. Ausreißer häufiger werden. Diese sind in den Frequenzspektren der Figuren 7b und 7c durch immer wiederkehrende Ausschläge bzw. Ausreißer 17 in hohen Frequenzbereichen zu erkennen. In Figur 7c sind die Ausschläge bzw. Ausreißer 17 nochmal deutlich vermehrt und hochfrequenter und vor allem regelmäßiger vorhanden als in Figur 7b. Bei dem Schneidrädchen aus Figur 7c kann man zudem den zeitlichen Abstand zwischen zwei Ausschlägen 17 auslesen. Dieser entspricht ungefähr dem Umfang des Schneidrädchens von 17,6 mm. Das Schneidrädchen hat offensichtlich einen dominanten Defekt, der einmal pro Umdrehung zu einem Ausschlag 17 führt.

Der Verschleiß ist also nicht nur prinzipiell zu detektieren, sondern es sind auch verschiedene Verschleißgrade und Verschleißarten unterscheidbar.

Bei den Schneidrädchen der Figuren 7b und 7c hätte das Schneidrädchen aus Figur 7b im realen Betrieb weiter im Einsatz bleiben können und Schneidrädchen aus Figur 7c hätte bereits vorher ersetzt werden müssen, um eine gute Bruchkantenqualität zu gewährleisten.

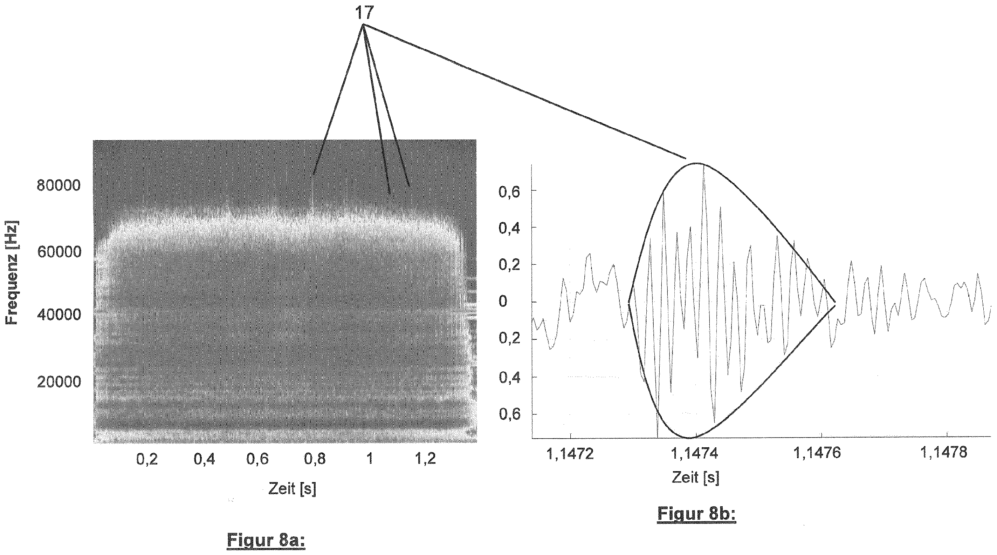

In Figur 8a ist nochmals das Frequenzspektrum des konventionellen Schneidrädchens mit mittlerem Verschleißgrad dargestellt. Das Schneidrädchen wies einen Rädchendurchmesser von 5,6 mm und einen Schneidenwinkel von 152° auf. Figur 8b zeigt einen Ausschlag 17 im Zeitsignal. Aus Figur 8b wird deutlich, dass es sich bei den Ausschlägen um ein echtes Signal handelt und kein Artefakt. Es handelt sich um ein sehr breitbandiges Signal von ca. 0,2 ms Dauer.

Figur 8b macht deutlich, dass die Abtastfrequenz idealerweise noch höher sein könnte, weil jede Spitze nur durch einen Abtastwert aufgelöst ist. Zur Signalanalyse wurden, wie oben bereits beschrieben, alle 1 ms, also um 187,5 Abtastwerte versetzt, 375 Abtastwerte mit dem Hanningfenster gewichtet einer Fouriertransformation unterzogen. Damit erreicht man im Frequenzspektrum also eine Zeitauflösung von 1 ms und eine Frequenzauflösung von 501,3 Hz. Bei weniger Abtastwerten im Hanningfenster wäre die Zeitauflösung auf Kosten der Frequenzauflösung besser.

In Figur 4 würde man beispielsweise dann das Stocken des Schneidrädchens zeitlich besser, aber im Frequenzbereich schlechter auflösen können. Bei einer typischen Schneidgeschwindigkeit von 100 Meter pro Minute und einem Schneidraddurchmesser von 5,6 mm beträgt die Zeit für eine Umdrehung 0,0105 Sekunden. Wenn im Abstand von einer Millisekunde 375 Abtastwerte einer Frequenzanalyse unterzogen werden, hat man im Mittel also 10,5 Frequenzanalysen pro Umdrehung des Schneidrades.

Figur 8b macht allerdings auch die Einschränkung der Signalanalyse über den Frequenzbereich deutlich. Das hier dargestellte Ereignis hat eine zeitliche Länge von etwa 0,3 Millisekunden, also bei einer Abtastfrequenz von 187,5 KHz 56 Abtastwerte. Bei einer Breite des Hanningfensters von 375 Abtastwerten stellt die Zeitdauer des "Ereignisses" nur einen gewissen Anteil dar. Zeitabschnitte ohne "Ereignis" haben daher eine größere Gewichtung. In der Zeitauflösung deutlicher wird das "Ereignis" durch eine geringere Breite des Hanningfensters, was dann allerdings auf Kosten der Frequenzauflösung geht.

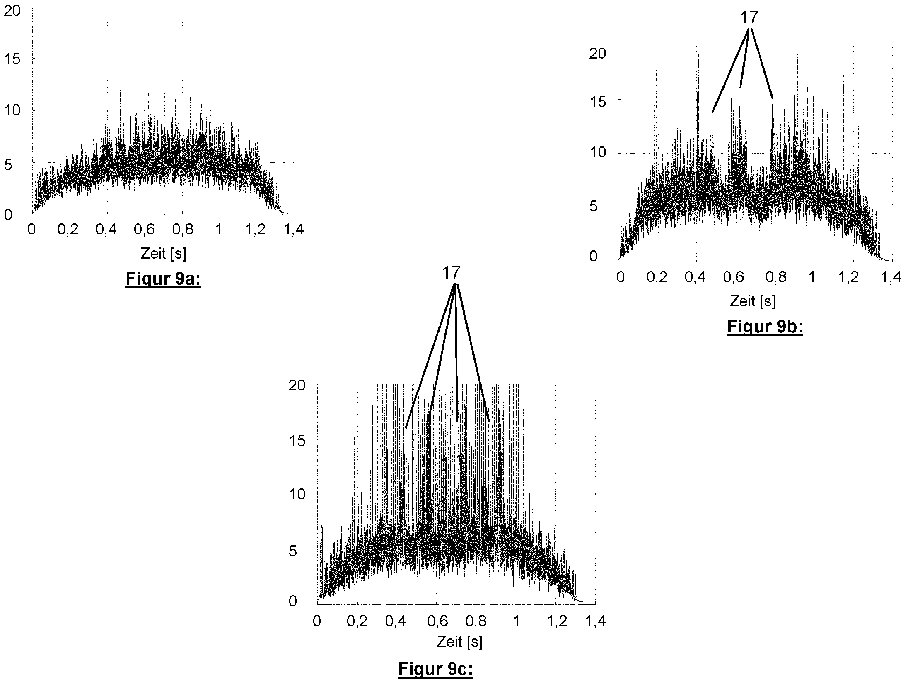

Figuren 9a-c zeigen Zeitsignale der Schneidrädchen gemäß den Figuren 7a-c. Für die Auswertung wurde der Absolutwert der Differenz der direkt aufeinanderfolgenden Audiozeitsignale mit einem gleitenden Durchschnitt von 50 Werten gemittelt. Das Ergebnis ist eine gut auszuwertende eindimensionale Kurve, die zusätzlich leicht über Algorithmen ausgewertet werden kann. Die Unterschiede im Verschleißgrad sind auch in dieser Darstellung sehr gut zu erkennen. Insbesondere sind wiederum die Ausschläge bzw. Ausreißer 17 gut zu erkennen.

Figuren 9a-c zeigen Vorteile einer geeigneten Signalanalyse im Zeitbereich auf. Diese liegen neben einer in Abhängigkeit vom gewählten Verfahren wahrscheinlich geringeren erforderlichen Rechenleistung in einer besseren Zeitauflösung. Hierdurch heben sich die sehr kurzzeitigen "Ereignisses" wie in Figur 8b deutlicher ab. Der im Rahmen der Figuren 9a-c verwendete, sehr einfache Algorithmus kostet wenig Rechenleistung.

Die Ausführungsbeispiele zeigen anschaulich, dass das erfindungsgemäße Schneidverfahren und die erfindungsgemäße Schneideinrichtung es Maschinenbedienern ermöglichen, wichtige Parameter der Schneideinrichtung und/oder des Schneidverfahrens, wie zum Beispiel Schneidgeschwindigkeit und/oder Schneiddruck, zu überwachen und gezielt einzustellen sowie Verschleißgrad und/oder Verschleißart des Schneidrädchens oder Maschinenfehler erkennen zu können.

Denn es ist ein deutlicher Einfluss der Schneidparameter auf das Zeitsignal und/oder Frequenzspektrum zu erkennen, der über verschiedene Schneidrädchen ähnlich ist. Bzw. eine Änderung der Schneidparameter ist in dem Zeitsignal und/oder dem Frequenzspektrum zu erkennen.

Die Analyse der Signale im Frequenzbereich (Frequenzanalyse) ist somit eine Alternative zur Auswertung im Zeitbereich. Je nach Anwendung werden Signale zur Auswertung entweder im Zeit- oder Frequenzbereich ausgewertet. Die Auswertung im Frequenzbereich ist beispielsweise bei konventionellen Schneidrädchen vorteilhaft, da bei nicht verschlissenen Schneidrädchen das Frequenzspektrum zeitlich recht konstant ist. Zudem bewirkt eine Erhöhung des Schneiddrucks auch bei einem neuen Schneidrädchen das Auftreten höherer Frequenzanteile. Mit zunehmendem Verschleiß treten zudem vermehrt "Ereignisse" auf, die eine kurzzeitige Veränderung des Frequenzspektrums insbesondere dahingehend bewirken, dass höherfrequente Frequenzanteile zunehmen. Dies sind allerdings noch besser im Zeitbereich zu sehen.

Darüber hinausgehend kann bei mikrostrukturierten Schneidrädchen mittels der Frequenzanalyse aufgrund des bekannten Zahnabstands und der bekannten Schneidgeschwindigkeit auf die theoretische Zahneingriffsfrequenz zurückgeschlossen werden. Weil die tatsächliche Frequenz etwas geringer ist, lässt dies auf Schlupf zurückschließen. Ist bei konstanter Schneidgeschwindigkeit eine leichte Welligkeit des Frequenzgangs einmal pro Umdrehung des Schneidrädchens zu erkennen, so lässt dies auf ein leichtes Stocken des Schneidrades in bestimmten Winkelpositionen schließen.

Letztendlich wird im Rahmen der Signalanalyse und -auswertung auf Basis des physikalischen Verständnisses der Schneidvorgänge und A-Priori-Wissen zum Beispiel über das eingesetzte Schneidrädchen und die bestimmte Prozessparameter (Durchmesser, mikrostrukturiert und wenn ja wie, Schneidgeschwindigkeit, ...) eine Charakterisierung bzw. Klassifizierung der aufgezeichneten Signale dahingehend durchgeführt, ob die Schneidparameter richtig eingestellt sind, Fehler in den Komponenten vorliegen und/oder Verschleiß des Schneidrädchens vorliegt. Beispielsweise werden 1/Umdrehungseffekte erkannt, die auf Fehler in den Komponenten oder einen Fehler an einer Stelle der Schneidkanten hindeuten.

Besonders vorteilhaft ist die Überwachung der Ritzvorgangs bei Dünnglas/Displayglas, allerdings auch bei konventionellen Glasdicken für hohe Ansprüche in Anwendungen für Automotive und großflächigen Glasfassaden. Im Displayglas-Bereich werden außer bei Smart Phones (Laserstrahlschneiden) ausschließlich mikrostrukturierte Schneidrädchen eingesetzt.

Im Rahmen der Erfindung liegt es dabei selbstverständlich auch, dass das Brechen und, im Fall einer Verbundglasscheibe das Trennen der Verbundglasfolie, nicht in der Schneideinrichtung stattfinden, sondern in davon getrennten Einrichtungen. Zudem können das Brechen und Trennen auch manuell erfolgen.

Zudem kann das Aufteilen der Glasscheibe so erfolgen, dass - je nach Schnittmuster - zunächst die gesamte Glasscheibe geschnitten bzw. geritzt wird und dann gebrochen und gegebenenfalls getrennt wird. Oder es wird zunächst eine Ritzlinie (im Fall von Verbundglasscheiben an beiden Glasscheibenoberflächen) erzeugt, direkt im Anschluss daran die Glasscheibe entlang der Ritzlinie gebrochen und gegebenenfalls getrennt. Dann werden die voneinander getrennten Glasscheiben erneut geritzt und aufgeteilt. Dies ist beliebig. Die Glasscheibe kann zur Erzeugung der nächsten Ritzlinie auch auf dem Auflagetisch gedreht werden und/oder abgetrennte Glasscheiben rückgeführt werden und dann erneut geschnitten werden. Dies ist z.B. in der DE 10 2018 217 660.4 für Verbundglasscheiben beschrieben.

Des Weiteren können, wie bereits erläutert, mit dem erfindungsgemäßen Schneidverfahren und/oder der erfindungsgemäßen Schneideinrichtung auch andere Bauteile aus Glas oder Keramik geritzt werden. Und plattenförmige Bauteile können grundsätzlich analog wie zu den Glasscheiben beschrieben in einzelne Bauteilzuschnitte aufgeteilt werden.

Zudem liegt es im Rahmen der Erfindung, anstelle des Schalltrichters 23 einen schüsselartigen Schallreflektor mit Parabolspiegel oder ein Schallrohr zur Bündelung des Schalls auf den Mikrofonpunkt des Schalldrucksensors 13 zu verwenden. Der Schalltrichter 23 ist aber bevorzugt, da er eine bessere Signalqualität, insbesondere bei unterschiedlichen Glasdicken, gewährleistet.

## Patentansprüche

1. Schneidverfahren zum oberflächlichen Ritzen eines, bevorzugt plattenförmigen, Bauteils aus Glas oder Keramik, vorzugsweise einer Glasscheibe (2), wobei mittels eines Schneidrädchen (8) eine Ritzlinie (6) in zumindest eine Bauteiloberfläche, vorzugsweise in eine Glasscheibenoberfläche (2a) der Glasscheibe (2), eingebracht wird,
**dadurch gekennzeichnet, dass**
der Ritzvorgang mittels Schallemissionsanalyse überwacht wird, wobei im Rahmen der Schallemissionsanalyse eine Signalanalyse und -auswertung der beim Ritzvorgang erfassten, digitalisierten Schallemissionssignale erfolgt, wobei die Signalanalyse und -auswertung im Zeitbereich und/oder im Frequenzbereich erfolgt.

2. Schneidverfahren nach Anspruch 1,
**dadurch gekennzeichnet, dass**
zur Ermittlung des Verschleißgrads des Schneidrädchens (8) und/oder der Verschleißart des Schneidrädchens (8) die Schallemissionssignale in Bezug auf Ausschläge (17) überwacht werden, die eine kurzzeitige Veränderung des Frequenzspektrums oder des Zeitsignals dahingehend darstellen, dass höherfrequente Frequenzanteile zunehmen.

3. Schneidverfahren nach einem der vorhergehenden Ansprüche,
**gekennzeichnet durch**
a) Sensorisches Erfassen von Schallemissionssignalen des Schneidrädchens (8) während des Ritzvorgangs,
b) Umwandlung und Digitalisierung der Schallemissionssignale in zumindest ein elektrisches Zeitsignal, vorzugsweise ein Spannungssignal, und Aufzeichnung des Zeitsignals,
c) Analyse und Auswertung des Zeitsignals.

4. Schneidverfahren nach einem der vorhergehenden Ansprüche,
**dadurch gekennzeichnet, dass**
bei der Signalanalyse und -auswertung zumindest ein Ist-Schneidradsignal, vorzugsweise automatisiert, mit zumindest einer Soll-Charakteristik des Schneidradsignals verglichen wird, wobei vorzugsweise
a) der Verschleißgrad des Schneidrädchens (8) und/oder die Verschleißart des Schneidrädchens (8) überwacht werden und der Verschleißgrad und/oder die Verschleißart des Schneidrädchens (8) anhand von Ausschlägen (17) in hohen Frequenzbereichen im Ist-Schneidradsignal bestimmt werden, wobei das Ist-Schneidradsignal ein auf Basis der gemessenen Schallemissionssignale erzeugtes elektrisches, digitales Zeitsignal oder ein Frequenzspektrum ist, und/oder
b) das die Soll-Charakteristik aufweisende Schneidradsignal und das korrespondierende Ist-Schneidradsignal jeweils ein auf Basis der gemessenen Schallemissionssignale erzeugtes elektrisches, digitales Zeitsignal oder ein Frequenzspektrum ist.

5. Schneidverfahren nach einem der vorhergehenden Ansprüche,
**dadurch gekennzeichnet, dass**
a) das Zeitsignal bei der Signalanalyse in zumindest ein Frequenzspektrum transformiert wird und die Transformation vorzugsweise mittels Fourier-Transformation, bevorzugt Fast-Fourier-Transformation, erfolgt, und/oder
b) mittels der Schallemissionsanalyse bestimmte Schneidparameter, vorzugsweise der Schneiddruck und/oder der Verschleißgrad des Schneidrädchens (8) und/oder die Verschleißart des Schneidrädchens (8) und/oder die Zahneingriffsfrequenz eines mikrostrukturierten Schneidrädchens und/oder die Schneidgeschwindigkeit überwacht werden, und/oder
c) zumindest Schallemissionssignale im nicht hörbaren Ultraschallbereich von 16 kHz bis 1,6 GHz aufgezeichnet und/oder analysiert werden, und/oder
d) die Schallemissionssignale bei der Durchführung von Längsschnitten detektiert werden, welche durch Bewegung einer Schneidbrücke (4) und/oder der Glasscheibe (2) und ohne Bewegung eines Schneidkopfes (5) entlang der Schneidbrücke (4) erzeugt werden.

6. Schneidverfahren nach einem der vorhergehenden Ansprüche,
**dadurch gekennzeichnet, dass**
die Schallemissionssignale des Schneidrädchens (8) beim Ritzvorgang detektiert und analysiert werden,
wobei vorzugsweise zumindest ein in der Nähe des Schneidrädchens (8) angeordneter, erster Schalldrucksensor (13) zur Detektion von Nahschallemissionssignalen des Schneidrädchens (8) verwendet wird, wobei vorzugsweise
a) ein zum Schneidrädchen (8) gerichteter Schalldrucksensor (13) mit Mitteln zur Bündelung des Schalls, vorzugsweise mit einem Schalltrichter (23) oder einem Schallreflektor mit Parabolspiegel, verwendet wird, und/oder
b) der Schalldrucksensor (13) vor Verschmutzung, insbesondere durch Schneidöl, bevorzugt mittels Spritzschutzmitteln, geschützt wird.

7. Schneidverfahren nach Anspruch 6,
**dadurch gekennzeichnet, dass**
zumindest ein weiterer Schalldrucksensor (14) zur Detektion von Fernschallemissionssignalen verwendet wird, der weiter von dem Schneidrädchen (8) entfernt angeordnet ist als der erste Schalldrucksensor (13), wobei vorzugsweise
a) die Nahschallemissionssignale und die Fernschallemissionssignale derart miteinander verrechnet werden, dass aus den Nahschallemissionssignalen Störgeräusche mittels Störgeräuschunterdrückung heraus gerechnet werden, oder
b) auf Basis der Stärke der mittels der Fernschallemissionssignale festgestellten Störgeräusche festgelegt wird, ob die Nahschallemissionssignale ausgewertet werden.

8. Schneidverfahren nach einem der vorhergehenden Ansprüche,
**dadurch gekennzeichnet, dass**
a) zur Signalanalyse und -auswertung Verfahren der künstlichen Intelligenz, insbesondere des maschinellen Lernens, verwendet werden, und/oder
b) die Schallemissionsanalyse online bzw. in Echtzeit erfolgt.

9. Verfahren zum Aufteilen von, bevorzugt plattenförmigen, Bauteilen aus Glas oder Keramik, vorzugsweise von Glasscheiben (2), wobei das Bauteil zumindest an einer seiner beiden Bauteiloberflächen geritzt wird und anschließend entlang der Ritzlinie (6) gebrochen wird,
**dadurch gekennzeichnet, dass**
das Ritzen gemäß dem Schneidverfahren gemäß einem der vorhergehenden Ansprüche erfolgt.

10. Verfahren nach Anspruch 9,
**dadurch gekennzeichnet, dass**
a) mittels der Überwachung des Ritzvorgangs die Bruchkantenqualität, insbesondere die Bruchkantenfestigkeit, von Bruchkanten der aufgeteilten Bauteile überwacht wird, und/oder
b) die Soll-Charakteristik des Schneidradsignals durch Einstellung der Schneidparameter in Abhängigkeit von einer gewünschten Bruchkantenqualität, insbesondere einer Bruchkantenfestigkeit, ermittelt wird, und/oder
c) die Glasscheibe (2a) eine aus zwei miteinander durch eine Verbundglasfolie verbundenen Glasplatten bestehende Verbundglasscheibe ist, wobei die Verbundglasscheibe an beiden Glasscheibenoberflächen (2a) geritzt wird, die beiden Glasplatten nacheinander entlang der Ritzlinie (6) gebrochen werden und die Verbundglasfolie getrennt wird.

11. Schneideinrichtung (1) zum Einbringen von Ritzlinien (6) in zumindest eine Bauteiloberfläche eines plattenförmigen Bauteils aus Glas oder Keramik, vorzugsweise in eine Glasscheibenoberfläche (2a) einer Glasscheibe (2), insbesondere Schneideinrichtung (1) zur Durchführung des Schneidverfahrens gemäß einem der Ansprüche 1 bis 8 und/oder des Verfahrens gemäß einem der Ansprüche 9 bis 10, aufweisend:
a) einen Auflagetisch (3) zur Aufnahme des zu schneidenden Bauteils,
b) eine den Auflagetisch (3) überspannende Schneidbrücke (4),
c) zumindest einen entlang der Schneidbrücke (4) in eine y-Richtung hin und her verfahrbar gelagerten Schneidkopf (5) mit einem Schneidrädchen (8),
d) Antriebsmittel zum Verfahren des Schneidkopfes (5) entlang der Schneidbrücke (4),
**dadurch gekennzeichnet, dass**
die Schneideinrichtung (1) Mittel zur Überwachung des Ritzvorgangs mittels Schallemmisionsanalyse, eine Digitalisierungseinrichtung zur Digitalisierung der Schallemissionssignale, und eine Auswerteeinrichtung (21) zur Signalanalyse und -auswertung der Schallemissionssignale aufweist.

12. Schneideinrichtung (1) nach Anspruch 11,
**dadurch gekennzeichnet, dass**
der Schneidkopf (5) zumindest einen ersten, in der Nähe des Schneidrädchens (8) angeordneten, Schalldrucksensor (13) zur Detektion von Nahschallemissionssignalen des Schneidrädchens (8) aufweist,
wobei vorzugsweise die Schneideinrichtung (1) Mittel zum Schutz des ersten Schalldrucksensors (13) vor Verschmutzung, insbesondere Spritzschutzmittel zum Schutz des ersten Schalldrucksensors (13) vor Verschmutzung durch Schneidöl, aufweist.

13. Schneideinrichtung (1) nach Anspruch 12,
**dadurch gekennzeichnet, dass**
der erste Schalldrucksensor (13) zum Schneidrädchen (8) gerichtet ist und vorzugsweise Mittel zur Bündelung des Schalls, bevorzugt einen Schalltrichter (23), aufweist, wobei der erste Schalldrucksensor (13) vorzugsweise Mittel zur Verhinderung des Eindringens von Schmutz in den Schalltrichter (23) aufweist, wobei vorzugsweise
a) der Schalldrucksensor (13) eine schalldurchlässige Schutzmembran (25) aufweist, die das offene, dem Schneidrädchen (8) zugewandte, Ende des Schalltrichters (23) abdeckt und zur Verhinderung des Eindringens von Schmutz in den Schalltrichter (23) dient, wobei vorzugsweise die Schutzmembran (25) aus einem Gewebe besteht, welches vorzugsweise aus Metall, bevorzugt aus Edelstahl, oder aus Kunststoff besteht, und/oder welches vorzugsweise eine Maschenweite von 40 bis 500 µm, besonders bevorzugt 55 bis 100 µm, aufweist und/oder welches Gewebefäden mit einer Fadendicke von 30 bis 50 µm aufweist, und/oder
b) der Schalltrichter (23) zumindest eine Lüftungsöffnung (26) aufweist, die sich von außen nach innen durchgehend durch eine Trichterwandung des Schalltrichters (23) hindurch erstreckt.

14. Schneideinrichtung (1) nach einem der Ansprüche 12 bis 13,
**dadurch gekennzeichnet, dass**
die Schneideinrichtung (1) zumindest einen weiteren Schalldrucksensor (14) zur Detektion von Fernschallemissionssignalen aufweist, der weiter von dem Schneidrädchen (8) entfernt angeordnet ist als der erste Schalldrucksensor (13), wobei der weitere Schalldrucksensor (14) vorzugsweise an dem Schneidkopf (5) befestigt ist.

15. Schneideinrichtung (1) nach einem der Ansprüche 11 bis 14,
**dadurch gekennzeichnet, dass**
a) die Schneidbrücke (4) feststehend ist oder in eine zur y-Richtung senkrechte, horizontale x-Richtung hin- und her über dem Bauteil verfahrbar ist, und/oder
b) die Schneideinrichtung (1) Mittel zum Brechen des Bauteils entlang der Ritzlinie (6) aufweist, und/oder
c) die Schneideinrichtung (1) zum Schneiden von Verbundglasscheiben dient und die Schneidbrücke (4) als Doppelschneidbrücke ausgebildet ist, die einen oberen und einen unteren Schneidbrückenteil aufweist, wobei der obere Schneidbrückenteil den Auflagetisch (3) oberseitig überspannt und der untere Schneidbrückenteil den Auflagetisch (3) unterseitig überspannt und sowohl am oberen als auch am unteren Schneidbrückenteil ein Schneidkopf (5) gelagert ist, wobei vorzugsweise die Schneideinrichtung (1) Trennmittel zum Trennen einer Verbundglasfolie aufweist, und/oder
d) die Mittel zur Überwachung des Ritzvorgangs mittels Schallemmisionsanalyse ausgebildet sind zur Überwachung der Schallemissionssignale in Bezug auf Ausschläge (17) in hohen Frequenzbereichen zur Ermittlung des Verschleißgrads des Schneidrädchens (8) und/oder der Verschleißart des Schneidrädchens (8).

## Claims

1. Cutting method for the superficial scoring of a, preferably plate-shaped, component made of glass or ceramic, preferably a glass sheet (2), wherein a scoring line (6) is introduced by means of a cutting wheel (8) into at least one component surface, preferably into a glass sheet surface (2a) of the glass sheet (2),
**characterized in that**
the scoring process is monitored by means of acoustic emission analysis, wherein in the context of the acoustic emission analysis, a signal analysis and evaluation of digitized acoustic emission signals detected during the scoring process is carried out, the signal analysis and evaluation being carried out in the time domain and/or in the frequency domain.

2. Cutting method according to claim 1,
**characterized in that**
for determining the degree of wear of the cutting wheel (8) and/or the type of wear of the cutting wheel (8), the acoustic emission signals are monitored in relation to peaks (17) which represent a brief change in the frequency spectrum or the time signal such that higher-frequency frequency components increase.

3. Cutting method according to any of the preceding claims,
**characterized by**
a) sensorial detecting acoustic emission signals from the cutting wheel (8) during the scoring process,
b) converting and digitizing the acoustic emission signals into at least one electrical time signal, preferably a voltage signal, and recording the time signal,
c) analyzing and evaluating the time signal.

4. Cutting method according to any of the preceding claims,
**characterized in that**
during analyzing and evaluating the signal, at least one actual cutting wheel signal is compared, preferably automatically, with at least one nominal characteristic of the cutting wheel signal, wherein preferably,
a) the degree of wear of the cutting wheel (8) and/or the type of wear of the cutting wheel (8) are monitored and the degree of wear of the cutting wheel (8) and/or the type of wear of the cutting wheel (8) are determined on the basis of peaks (17) in high frequency domains in the actual cutting wheel signal, the actual cutting wheel signal being an electrical, digital time signal generated on the basis of the measured acoustic emission signals or a frequency spectrum, and/or
b) the cutting wheel signal having the target characteristic and the corresponding actual cutting wheel signal are each an electrical digital time signal or a frequency spectrum generated on the basis of the measured acoustic emission signals.

5. Cutting method according to any of the preceding claims,
**characterized in that**
a) the time signal is transformed into at least one frequency spectrum during the signal analysis and the transformation preferably is performed by means of Fourier transform, preferably Fast Fourier Transform, and/or
b) cutting parameters determined by means of the acoustic emission analysis, preferably the cutting pressure and/or the degree of wear of the cutting wheel (8) and/or the type of wear of the cutting wheel (8) and/or the tooth meshing frequency of a microstructured cutting wheel and/or the cutting speed are monitored, and/or
c) at least acoustic emission signals in the inaudible ultrasonic range from 16 kHz to 1.6 GHz are recorded and/or analyzed, and/or
d) the acoustic emission signals are detected when longitudinal cuts are made, which are generated by movement of a cutting bridge (4) and/or the glass sheet (2) and without movement of a cutting head (5) along the cutting bridge (4).

6. Cutting method according to any one of the preceding claims,
**characterized in that**
the acoustic emission signals of the cutting wheel (8) are detected and analyzed during the scoring process,
wherein preferably at least one first sound pressure sensor (13) arranged in the vicinity of the cutting wheel (8) is used for detecting near acoustic emission signals of the cutting wheel (8), wherein preferably
a) a sound pressure sensor (13) directed towards the cutting wheel (8) is used with means for focusing the sound, preferably with a sound funnel (23) or a sound reflector with parabolic mirror, and/or
b) the sound pressure sensor (13) is protected against contamination, in particular by cutting oil, preferably by means of splash protection agents.

7. Cutting method according to claim 6,
**characterized in that**
at least one further sound pressure sensor (14) is used for detecting remote acoustic emission signals, which is arranged further away from the cutting wheel (8) than the first sound pressure sensor (13), wherein preferably
a) the near acoustic emission signals and the remote acoustic emission signals are set off against each other in such a way that noise is calculated out of the near acoustic emission signals by means of noise suppression, or
b) based on the level of the noise detected by means of the remote acoustic emission signals, it is determined whether the near acoustic emission signals are evaluated.

8. Cutting method according to any one of the preceding claims,
**characterized in that**
a) methods of artificial intelligence, in particular of machine learning, are used for the signal analysis and evaluation, and/or
b) the acoustic emission analysis is performed online or in real time.

9. Method for dividing of, preferably plate-shaped, components made of glass or ceramics, preferably glass sheets (2), wherein the component is scored at least on one of its two component surfaces and then broken along the scoring line (6),
**characterized in that**
the scoring is performed according to the cutting method according to any one of the preceding claims.

10. Method according to claim 9,
**characterized in that**
a) by means of monitoring the scoring process, the breaking edge quality, in particular the breaking edge strength, of breaking edges of the divided components is monitored, and/or
b) the target characteristic of the cutting wheel signal is determined by setting the cutting parameters as a function of a desired breaking edge quality, in particular a breaking edge strength, and/or
c) the glass sheet (2a) is a laminated glass sheet consisting of two glass sheets joined together by a laminated glass film, wherein the laminated glass sheet is scored on both glass sheet surfaces (2a), the two glass sheets are successively broken along the scoring line (6), and the laminated glass film is separated.

11. Cutting device (1) for introducing scoring lines (6) into at least one component surface of a plate-shaped component made of glass or ceramic, preferably into a glass sheet surface (2a) of a glass sheet (2), in particular cutting device (1) for carrying out the cutting method according to one of the claims 1 to 8 and/or the method according to one of the claims 9 to10, comprising:
a) a support table (3) for receiving the component to be cut,
b) a cutting bridge (4) spanning the support table (3),
c) at least one cutting head (5) having a cutting wheel (8) mounted to be movable back and forth along the cutting bridge (4) in a y-direction and,
d) drive means for moving the cutting head (5) along the cutting bridge (4),
**characterized in that**
the cutting device (1) has means for monitoring the scoring process by means of acoustic emission analysis, a digitizing device for digitizing the acoustic emission signals, and an evaluation device (21) for signal analysis and evaluation.

12. Cutting device (1) according to claim 11,
**characterized in that**
the cutting head (5) comprises at least a first sound pressure sensor (13) arranged in the vicinity of the cutting wheel (8) for detecting near acoustic emission signals of the cutting wheel (8), wherein preferably
the cutting device (1) has means for protecting the first sound pressure sensor (13) from contamination, in particular splash protection means for protecting the first sound pressure sensor (13) from contamination by cutting oil.

13. Cutting device (1) according to claim 12,
**characterized in that**
the first sound pressure sensor (13) is directed towards the cutting wheel (8) and preferably has means for focusing the sound, preferably a sound funnel (23), the first sound pressure sensor (13) preferably having means for preventing dirt from entering the sound funnel (23), wherein preferably
a) the sound pressure sensor (13) has a sound-permeable protective membrane (25) which covers the open end of the sound funnel (23) facing the cutting wheel (8) and serves to prevent dirt from entering the sound funnel (23),
wherein preferably the protective membrane (25) consists of a fabric which is preferably made of metal, preferably of stainless steel, or of plastic, and/or which preferably has a mesh size of 40 to 500 µm, particularly preferably 55 to 100 µm, and/or which has fabric threads with a thread thickness of 30 to 50 µm, and/or
b) the sound funnel (23) has at least one ventilation opening (26) which extends continuously from the outside to the inside through a funnel wall of the sound funnel (23).

14. Cutting device (1) according to one of the claims 12 to 13,
**characterized in that**
the cutting device (1) has at least one further sound pressure sensor (14) for detecting remote acoustic emission signals, which is arranged further away from the cutting wheel (8) than the first sound pressure sensor (13), the further sound pressure sensor (14) preferably being attached to the cutting head (5).

15. Cutting device (1) according to one of the claims 11 to 14,
**characterized in that**
a) the cutting bridge (4) is stationary or can be moved back and forth over the component in a horizontal x-direction perpendicular to the y-direction, and/or
b) the cutting device (1) has means for breaking the component along the scoring line (6), and/or
c) the cutting device (1) serves for cutting laminated glass sheets and the cutting bridge (4) is designed as a double cutting bridge which has an upper and a lower cutting bridge part, the upper cutting bridge part spanning the support table (3) on the upper side and the lower cutting bridge part spanning the support table (3) on the lower side, and a cutting head (5) being mounted both on the upper and on the lower cutting bridge part,
wherein preferably the cutting device (1) has separating means for separating a laminated glass film, and/or
d) means for monitoring the scoring process by means of acoustic emission analysis are configured to monitor the acoustic emission signals in relation to peaks (17) in high frequency domains for determining the degree of wear of the cutting wheel (8) and/or the type of wear of the cutting wheel (8).

## Revendications

1. Procédé de coupe pour rayer superficiellement un élément de construction, de préférence en forme de plaque, en verre ou en céramique, de préférence une feuille de verre (2), où une ligne de rayure (6) est réalisée au moyen d'une molette de coupe (8) dans au moins une surface de l'élément de construction, de préférence dans une surface (2a) de la feuille de verre (2),
**caractérisé en ce que**
le processus de rayage est surveillé au moyen d'une analyse des émissions sonores, où
dans le cadre de l'analyse des émissions sonore, on effectue une analyse et une évaluation du signal des signaux d'émission sonore digitalisés et saisis lors du processus de rayage, l'analyse et l'évaluation du signal s'effectuant dans le domaine temporel et/ou dans le domaine des fréquences.

2. Procédé de coupe selon la revendication 1,
**caractérisé en ce que**
pour déterminer le degré d'usure de la molette de coupe (8) et/ou le type d'usure de la molette de coupe (8), les signaux d'émission sonore sont surveillés par rapport à des élongations (17) qui représentent une modification de courte durée du spectre de fréquences ou du signal temporel de telle sorte que des proportions de fréquence plus élevées augmentent.

3. Procédé de coupe selon l'une quelconque des revendications précédentes,
**caractérisé par**
a) Détecter par senseur des signaux d'émission sonore de la molette de coupe (8) pendant le processus de rayage,
b) la conversion et la digitalisation des signaux d'émission sonore en au moins un signal électrique temporel, de préférence un signal de tension, et l'enregistrement du signal temporel,
c) Analyse et évaluation du signal temporel.

4. Procédé de coupe selon l'une quelconque des revendications précédentes,
**caractérisé en ce que**
lors de l'analyse et de l'évaluation des signaux, au moins un signal réel de la molette de coupe est comparé, de préférence de manière automatisée, à au moins une caractéristique de consigne du signal de la molette de coupe, où de préférence
a) le degré d'usure de la molette de coupe (8) et/ou le type d'usure de la molette de coupe (8) sont surveillés et le degré d'usure et/ou le type d'usure de la molette de coupe (8) sont déterminés à l'aide d'élongations (17) dans des domaines de fréquences élevées dans le signal réel de la molette de coupe, le signal réel de la molette de coupe étant un signal temporel électrique, digitalisé ou un spectre de fréquences généré sur la base des signaux d'émission sonore mesurés,
et/ou
b) le signal de la molette de coupe comprenant la caractéristique de consigne et le signal de la molette de coupe réel correspondant sont respectivement un signal temporel électrique, digitalisé ou un spectre de fréquence généré sur la base des signaux d'émission sonore mesurés.

5. Procédé de coupe selon l'une quelconque des revendications précédentes,
**caractérisé en ce que**
a) le signal temporel est transformé en au moins un spectre de fréquences lors de l'analyse du signal et la transformation s'effectue de préférence au moyen d'une transformation de Fourier, de préférence d'une transformation de Fourier rapide,
b) des paramètres de coupe déterminés, de préférence la pression de coupe et/ou le degré d'usure de la molette de coupe (8) et/ou le type d'usure de la molette de coupe (8) et/ou la fréquence d'engrènement d'une molette de coupe microstructurée et/ou la vitesse de coupe, sont contrôlés au moyen de l'analyse des émissions sonores, et/ou
c) au moins des signaux d'émission sonore sont enregistrés et/ou analysés dans le domaine ultrasonore inaudible de 16 kHz à 1,6 GHz, et/ou
d) les signaux d'émission sonore sont détectés lors de l'exécution de coupes longitudinales qui sont générées par le mouvement d'un pont de coupe (4) et/ou de la feuille de verre (2) et sans mouvement d'une tête de coupe (5) le long du pont de coupe (4).

6. Procédé de coupe selon l'une quelconque des revendications précédentes,
**caractérisé en ce que**
les signaux d'émission sonore de la molette de coupe (8) sont détectés et analysés lors du processus de rayage,
où de préférence au moins un premier senseur de pression acoustique (13) disposé à proximité de la molette de coupe (8) est utilisé pour détecter des signaux d'émission sonore proches de la molette de coupe (8), où de préférence
a) un senseur de pression acoustique (13) orienté vers la molette de coupe (8) est utilisé avec des moyens de focalisation du son, de préférence avec un cône acoustique (23) ou un réflecteur acoustique avec miroir parabolique, et/ou
b) le senseur de pression acoustique (13) est protégé contre l'encrassement, notamment par de l'huile de coupe, de préférence au moyen de moyens de protection contre les projections.

7. Procédé de coupe selon la revendication 6,
**caractérisé en ce que**
au moins un autre senseur de pression acoustique (14) est utilisé pour la détection de signaux d'émission sonore à distance, qui est disposé plus loin de la molette de coupe (8) que le premier senseur de pression acoustique (13), où de préférence
a) les signaux d'émission sonore proche et les signaux d'émission sonore à distance sont calculés ensemble de telle sorte que les bruits parasites sont éliminés des signaux d'émission sonore proche au moyen d'une suppression des bruits parasites, ou
b) sur la base de l'intensité des bruits parasites détectés au moyen des signaux d'émission sonore à distance, il est déterminé si les signaux d'émission sonore proche sont évalués.

8. Procédé de coupe selon l'une quelconque des revendications précédentes,
**caractérisé en ce que**
a) des procédés d'intelligence artificielle, en particulier d'apprentissage automatique, sont utilisés pour l'analyse et l'évaluation des signaux, et/ou
b) l'analyse des émissions sonores est effectuée en ligne ou en temps réel.

9. Procédé pour diviser des éléments de construction, de préférence en forme de plaques, en verre ou en céramique, de préférence des feuilles de verre (2), où l'élément de construction est rayé au moins sur l'une de ses deux surfaces d'élément de construction et est ensuite brisé le long de la ligne de rayure (6),
**caractérisé en ce que**
le rayage est réalisée selon le procédé de coupe selon l'une des revendications précédentes.

10. Procédé selon la revendication 9,
**caractérisé en ce que**
a) la qualité des bords de rupture, en particulier la résistance des bords de rupture, des bords de rupture des éléments de construction divisés est surveillée au moyen de la surveillance du processus de rayage, et/ou
b) la caractéristique de consigne du signal de la molette de coupe est déterminée par réglage des paramètres de coupe en fonction d'une qualité souhaitée du bord de rupture, en particulier d'une résistance du bord de rupture, et/ou
c) la feuille de verre (2a) est une feuille de verre feuilleté constituée de deux plaques de verre reliées l'une à l'autre par un film de verre feuilleté, la feuille de verre feuilleté étant rayée sur les deux surfaces de feuille de verre (2a), les deux plaques de verre étant brisées l'une après l'autre le long de la ligne de rayure (6) et le film de verre feuilleté étant séparée.

11. Dispositif de coupe (1) pour réaliser des lignes de rayure (6) dans au moins une surface de l'élément de construction d'un élément de construction en forme de plaque en verre ou en céramique, de préférence dans une surface de feuille de verre (2a) d'une feuille de verre (2), en particulier dispositif de coupe (1) pour la mise en œuvre du procédé de coupe selon l'une des revendications 1 à 8 et/ou du procédé selon l'une des revendications 9 à10, comprenant:
a) une table d'appui (3) pour recevoir l'élément de construction à couper,
b) un pont de coupe (4) recouvrant la table d'appui (3),
c) au moins une tête de coupe (5) montée de manière à pouvoir se déplacer en va-et-vient dans une direction y le long du pont de coupe (4) et comportant une molette de coupe (8),
d) des moyens d'entraînement pour déplacer la tête de coupe (5) le long du pont de coupe (4),
**caractérisé en ce que**
le dispositif de coupe (1) comprend des moyens de surveillance du processus de rayage au moyen d'une analyse des émissions sonores, un dispositif de digitalisation pour digitaliser les signaux d'émission sonore, et un dispositif d'évaluation (21) pour l'analyse et l'évaluation du signal des signaux d'émission sonore.

12. Dispositif de coupe (1) selon la revendication 11,
**caractérisé en ce que**
la tête de coupe (5) comprend au moins un premier senseur de pression acoustique (13), disposé à proximité de la molette de coupe (8), pour la détection de signaux d'émission sonore proches de la molette de coupe (8),
où le dispositif de coupe (1) comprend de préférence des moyens pour protéger le premier senseur de pression acoustique (13) de l'encrassement, en particulier des moyens de protection contre les projections pour protéger le premier senseur de pression acoustique (13) de l'encrassement par l'huile de coupe.

13. Dispositif de coupe (1) selon la revendication 12,
**caractérisé en ce que**
le premier senseur de pression acoustique (13) est orienté vers la molette de coupe (8) et comprend de préférence des moyens de focalisation du son, de préférence un cône acoustique (23), le premier senseur de pression acoustique (13) comprenant de préférence des moyens pour empêcher la pénétration de saletés dans le cône acoustique (23), où de préférence
a) le senseur de pression acoustique (13) comprend une membrane de protection (25) perméable au son, qui recouvre l'extrémité ouverte du cône acoustique (23), tournée vers la molette de coupe (8), et qui sert à empêcher la pénétration de saletés dans le cône acoustique (23), la membrane de protection (25) étant de préférence constituée d'un tissu, qui est de préférence en métal, de préférence en acier inoxydable, ou en matière plastique, et/ou qui comprend de préférence une ouverture de maille de 40 à 500 µm, de préférence de 55 à 100 µm, et/ou qui comprend des fils de tissu avec une épaisseur de fil de 30 à 50 µm, et/ou
b) le cône acoustique (23) comprend au moins une ouverture d'aération (26) qui s'étend de l'extérieur vers l'intérieur en continu à travers une paroi de cône du cône acoustique (23).

14. Dispositif de coupe (1) selon l'une des revendications 12 à 13,
**caractérisé en ce que**
le dispositif de coupe (1) comprend au moins un autre senseur de pression acoustique (14) pour la détection de signaux d'émission sonore à distance, qui est disposé plus loin de la molette de coupe (8) que le premier senseur de pression acoustique (13), l'autre senseur de pression acoustique (14) étant de préférence fixé sur la tête de coupe (5).

15. Dispositif de coupe (1) selon l'une des revendications11 à 14,
**caractérisé en ce que**
a) le pont de coupe (4) est fixe ou peut être déplacé en va-et-vient au-dessus d'élément de construction dans une direction x horizontale perpendiculaire à la direction y, et/ou
b) le dispositif de coupe (1) comprend des moyens pour briser l'élément de construction le long de la ligne de rayure (6), et/ou
c) le dispositif de coupe (1) sert à couper des feuilles de verre feuilleté et le pont de coupe (4) est conçu comme un pont de coupe double qui comprend une partie de pont de coupe supérieure et une partie de pont de coupe inférieure, la partie de pont de coupe supérieure enjambant la table d'appui (3) du côté supérieur et la partie de pont de coupe inférieure enjambant la table d'appui (3) du côté inférieur et une tête de coupe (5) étant montée aussi bien sur la partie de pont de coupe supérieure que sur la partie de pont de coupe inférieure, le dispositif de coupe (1) comprenant de préférence des moyens de séparation pour séparer un film de verre feuilleté, et/ou
d) les moyens de surveillance du processus de rayage au moyen d'une analyse des émissions sonore sont conçus pour surveiller les signaux d'émission sonore par rapport à des d'élongations (17) dans des domaines de fréquences élevées pour déterminer le degré d'usure de la molette de coupe (8) et/ou le type d'usure de la molette de coupe (8).
